(19) **Europäisches Patentamt / European Patent Office / Office européen des brevets**

(11) **EP 4 560 967 A2**

(12) # EUROPEAN PATENT APPLICATION

(43) Date of publication:
28.05.2025 Bulletin 2025/22

(51) International Patent Classification (IPC):
**H04L 5/00** *(2006.01)*

(21) Application number: 24217689.9

(22) Date of filing: 02.04.2021

(52) Cooperative Patent Classification (CPC):
**H04L 5/0098; H04L 5/001**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 15.05.2020 CN 202010415410
23.10.2020 CN 202011150428

(62) Document number(s) of the earlier application(s) in accordance with Art. 76 EPC:
**21803330.6 / 4 145 744**

(71) Applicant: **Huawei Technologies Co., Ltd.**
**Shenzhen, Guangdong 518129 (CN)**

(72) Inventors:
• **ZHANG, Qian**
**Shenzhen, 518129 (CN)**
• **LIU, Daoming**
**Shenzhen, 518129 (CN)**

• **LI, Xing**
**Shenzhen, 518129 (CN)**
• **CHAI, Honglin**
**Shenzhen, 518129 (CN)**
• **LIU, Ye**
**Shenzhen, 518129 (CN)**
• **LI, Bingzhao**
**Shenzhen, 518129 (CN)**

(74) Representative: **Epping - Hermann - Fischer**
**Patentanwaltsgesellschaft mbH**
**Schloßschmidstraße 5**
**80639 München (DE)**

Remarks:
This application was filed on 05-12-2024 as a divisional application to the application mentioned under INID code 62.

(54) **MESSAGE PROCESSING METHOD AND DEVICE**

(57) Embodiments of this application disclose a message processing method and a device, and relate to the field of communication technologies. In this way, a network device can determine a DC location that is corresponding to communication when a plurality of BWPs are simultaneously activated. A specific solution is as follows: A network device receives a first message, where the first message includes a DC location of each of M bandwidth parts BWP that are configured by the network device for a terminal; and the network device determines a DC location of current communication based on DC locations of N activated BWPs in the M BWPs, where M is an integer greater than or equal to 2, and N is an integer greater than or equal to 2 and less than M.

FIG. 2

**Description**

This application claims priority to Chinese Patent Application No. 202010415410.8, filed with the National Intellectual Property Administration on May 15, 2020 and entitled "MESSAGE PROCESSING METHOD AND DEVICE", and claims priority to Chinese Patent Application No. 202011150428.6, filed with the National Intellectual Property Administration on October 23, 2020 and entitled "MESSAGE PROCESSING METHOD AND DEVICE", which are incorporated herein by reference in their entireties.

**TECHNICAL FIELD**

Embodiments of this application relate to the field of communication technologies, and in particular, to a message processing method and a device.

**BACKGROUND**

In fifth generation mobile communication technology (5th generation mobile networks, 5G) communication, a terminal may communicate with a network device in different cells. For example, the network device may configure a plurality of cells (cell) for the terminal, and configure one or more bandwidth parts (bandwidth part, BWP) in each cell, so that the terminal communicates with the network device by using different BWPs.

At present, the terminal may report a direct current (direct current, DC) location corresponding to the BWP to the network device, so that the network device optimizes, based on the DC location (DC location), data transmission performed with the terminal by using the BWP.

It should be noted that, when the network device configures a plurality of cells for the terminal and each cell carrier includes a plurality of BWPs, the terminal may separately report DC locations corresponding to the BWPs in each cell carrier to the network device. In this way, in a communication process, the network device can optimize corresponding data transmission based on a DC location corresponding to an activated BWP.

It should be understood that, when a plurality of BWPs are simultaneously activated, for example, in a carrier aggregation (carrier aggregation, CA) communication scenario, CA communication is corresponding to only one DC location, and the DC location may be used to perform targeted data optimization on the CA communication. However, at present, the network device can learn only a DC location of each BWP. As a result, the network device cannot determine the DC location that is corresponding to the CA communication when the plurality of BWPs are simultaneously activated, and cannot optimize data transmission of the CA communication based on the DC location.

**SUMMARY**

Embodiments of this application provide a message processing method and a device, so that a network device can determine a DC location that is corresponding to communication when a plurality of BWPs are simultaneously activated.

To achieve the foregoing objective, the following technical solutions are used in embodiments of this application.

According to a first aspect, a message processing method is provided. The method includes: A network device receives a first message, where the first message includes a DC location of each of M bandwidth parts (BWP) that are configured by the network device for a terminal; and the network device determines a DC location of current communication based on DC locations of N activated BWPs in the M BWPs, where M is an integer greater than or equal to 2, and N is an integer greater than or equal to 2 and less than M.

In this solution, the network device can determine the DC location of the current communication based on the DC locations corresponding to the activated BWPs in DC locations corresponding to different BWPs in the first message. Therefore, an implementable method for determining, by the network device, a DC location that is corresponding to communication when a plurality of BWPs are simultaneously activated is provided. In this way, the network device can determine a local oscillator leakage location of the current communication, to perform targeted processing on the local oscillator leakage location, thereby improving quality of entire data transmission.

In a possible design, that the network device determines a DC location of current communication based on DC locations of N activated BWPs in the M BWPs includes: The network device determines the DC location of the current communication based on a first frequency corresponding to a DC location of a first BWP and a second frequency corresponding to a DC location of a second BWP. A frequency corresponding to the DC location of the current communication is a center frequency of the first frequency and the second frequency. The first BWP is a BWP that is in the N BWPs and whose DC location is corresponding to a lowest frequency, and the second BWP is a BWP that is in the N BWPs and whose DC location is corresponding to a highest frequency. Based on this solution, a specific implementation method for determining, by the network device, a DC location that is corresponding to communication when a plurality of BWPs are simultaneously activated is provided. For example, the network device may use, as the frequency corresponding to the DC location of the current communication, a center frequency corresponding to DC locations of a BWP with a highest frequency and a BWP with a lowest frequency in the plurality of activated BWPs. It should be noted that in some other embodiments of this application, the network device may alternatively determine the DC location of the current communication by using another method. For example, the network device may determine, based on DC locations of all activated BWPs, an average value of frequencies corresponding to the DC locations, and use the average value as the frequency corresponding to the DC location of the current communication. For another example, the network device may set different weights for all the activated BWPs. The weights may be set based on data transmission priorities or data transmission amounts of different BWPs, or may be flexibly set based on another requirement. The network device may comprehensively determine the DC location of the current communication based on the weights corresponding to the plurality of activated BWPs and the DC locations corresponding to the activated BWPs.

In a possible design, a center frequency of frequencies corresponding to DC locations of any two of the M BWPs is a frequency corresponding to a resource element (RE) location. In this solution, the DC location of the current communication determined by the network device is an available location. It should be noted that in this embodiment of this application, for the method for determining a DC location that is corresponding to communication when a plurality of different BWPs are simultaneously activated, the DC location corresponding to the communication may be limited to a frequency location corresponding to the RE location.

In a possible design, the method further includes: The network device sends a reporting indication message to the terminal, to indicate the terminal to report the DC locations corresponding to the BWPs allocated to the terminal. In this solution, the network device can proactively manage, by using the reporting indication message, an operation performed by the terminal for DC location reporting.

According to a second aspect, a message processing method is provided. The method includes: A terminal sends a reporting message, where the reporting message includes a DC location of each of M bandwidth parts (BWP) that are configured by a network device for the terminal, a center frequency of frequencies corresponding to DC locations of any two of the M BWPs is a frequency corresponding to a resource element (RE) location, and M is an integer greater than or equal to 2.

In this solution, the terminal may process messages corresponding to all configured BWPs and then send processed messages to the network device. A center frequency location corresponding to DC locations of any two BWPs that may be simultaneously activated is an RE location, to ensure that DC locations corresponding to communication are available locations. It should be noted that in the method provided in the second aspect, a limitation on the center frequency corresponding to the DC locations of the any two BWPs is corresponding to using, by the network device, a center frequency corresponding to DC locations of two activated BWPs as the DC location corresponding to the communication. In some other embodiments of this application, if the network device may determine, based on DC locations of all activated BWPs, an average value of frequencies corresponding to the DC locations, and use the average value as a frequency corresponding to the DC location of the current communication, when the terminal allocates DC locations for different BWPs, that the DC location of the communication determined based on the method is an available DC location needs to be considered and ensured. Similarly, in some other embodiments of this application, the network device may set different weights for all the activated BWPs. The weights may be set based on data transmission priorities or data transmission amounts of different BWPs, or may be flexibly set based on another requirement. If the network device may comprehensively determine the DC location of the current communication based on the weights corresponding to the plurality of activated BWPs and the DC locations corresponding to the activated BWPs, when the terminal allocates DC locations for different BWPs, that the DC location of the communication determined based on the method is an available DC location needs to be considered and ensured.

In a possible design, the method further includes: The terminal receives a reporting indication message, where the reporting indication message indicates the terminal to report the DC location of each of the M BWPs that are configured by the network device for the terminal. In this solution, the terminal may report the DC location of each BWP according to the indication of the network device. It should be noted that in some other embodiments of this application, the terminal may alternatively report the DC location proactively, for example, report the DC location based on a specific periodicity, or report the DC location after the corresponding DC location is configured for each BWP configured by the network device for the terminal.

According to a third aspect, a message processing method is provided. The method includes: A network device receives a first message, where the first message includes P DC locations, each of the P DC locations is a DC location corresponding to any two of M bandwidth parts (BWP) that are configured by the network device for a terminal, P is an integer greater than or equal to 1, and M is an integer greater than or equal to 2; and the network device determines a DC location of current communication based on the first message.

Based on this solution, a method for more quickly determining, by the network device, the DC location that is corresponding to the communication when a plurality of BWPs are simultaneously activated is provided. For example, the network device may receive DC locations of communication that are reported by the terminal and that are corresponding to combinations, each of which includes two of all BWPs that may be simultaneously activated; and determine the DC location of the current communication based on the DC locations. It should be noted that in this embodiment of this application, the first message received by the network device may include the DC locations of the communication corresponding to the combinations, each of which includes two of all the BWPs configured by the network device for the terminal. In some other embodiments, the first message may alternatively include only DC locations of communication corresponding to combinations, each of which includes two of some BWPs. A possibility of combinations included in the first message may be determined by a network environment in which the current communication is situated, where each combination includes two BWPs. For example, when the network environment in which the current communication is situated allows two or more BWPs to be simultaneously activated in one cell, the first message may include a DC location of communication corresponding to any two of all the BWPs configured by the network device for the terminal. For another example, when the network environment in which the current communication is situated allows only one BWP to be activated at a time in one cell, the first message does not need to include a DC location of communication corresponding to two BWPs in one cell. Certainly, in some embodiments, a DC location of communication corresponding to any two activated BWPs in all the BWPs configured by the network device for the terminal is reported without considering a requirement of the network environment in which the current communication is situated. In this way, it is ensured that the first message can cover all possible scenarios in which a plurality of BWPs are simultaneously activated.

In a possible design, P is an integer less than or equal to $C_M^2$. In this solution, a quantity of DC locations in the first message is determined. In other words, the first message may include DC locations of communication corresponding to all combinations, each of which includes two BWPs that may be simultaneously activated in the BWPs configured by the network device for the terminal. It can be understood that in some other implementations of this application, if the requirement of the network environment in which the current communication is situated is considered, the quantity of Ps may be appropriately adjusted. For example, when the network environment in which the current communication is situated allows only one BWP to be activated at a time in one cell, P may be $C_M^2 - Q \times C_S^2$, where Q is a quantity of cells configured by the network device for the terminal, and S is a quantity of BWPs in each cell.

In a possible design, any one of the P DC locations is a resource element (RE) location. In this solution, it can be ensured that the DC location of the current communication determined by the network device based on the first message is an available location.

In a possible design, that the network device determines a DC location of current communication based on the first message includes: The network device determines a DC location corresponding to a first BWP and a second BWP in N activated BWPs in the M BWPs as the DC location of the current communication, where the DC location corresponding to the first BWP and the second BWP is one of the P DC locations, the first BWP is a BWP with a lowest frequency location in the N BWPs, the second BWP is a BWP with a highest frequency location in the N BWPs, and N is an integer greater than or equal to 2 and less than M. In this solution, the network device may determine the corresponding DC location of the current communication from the first message based on the BWP with the highest frequency and the BWP with the lowest frequency in the activated BWPs in the current communication.

In a possible design, the first message further includes a cell identity indicating a cell (cell) in which each of the P DC locations is located. In this solution, the first message may further include a cell identity of each possible DC location of communication, so that the network device can more clearly determine the corresponding DC location of the current communication.

In a possible design, the method further includes: The network device sends a second message, where the second message indicates the terminal to report the DC location corresponding to the any two of the M BWPs that are configured by the network device for the terminal. In this solution, the network device may proactively send the second message to the terminal, to indicate the terminal to send the corresponding DC location that is corresponding to the communication when a plurality of BWPs may be simultaneously activated.

In a possible design, the first message further includes a DC location corresponding to each of the M BWPs that are configured by the network device for the terminal. In this solution, the network device may further determine, based on the first message, the DC location that is corresponding to the current communication when only one BWP is activated.

According to a fourth aspect, a message processing method is provided. The method includes: A terminal sends a first message, where the first message includes P DC locations, each of the P DC locations is a DC location corresponding to any two of M bandwidth parts (BWP) that are configured by a network device for the terminal, P is an integer greater than or equal to 1, and M is an integer greater than or equal to 2.

Based on this solution, a method for more quickly determining, by the network device, a DC location that is corresponding to communication when a plurality of BWPs are simultaneously activated is provided. For example, the terminal may report, to the network device, DC locations of communication corresponding to combinations, each of which includes two of all BWPs that may be simultaneously activated, so that the network device determines the DC location of the current communication based on the DC locations. It should be noted that in this embodiment of this application, the first message may include the DC locations of the communication corresponding to the combinations, each of which includes two of all the BWPs configured by the network device for the terminal. In some other embodiments, the first message may alternatively include only DC locations of communication corresponding to combinations, each of which includes two of some BWPs. A possibility of combinations included in the first message may be determined by a network environment in which the current communication is situated, where each combination includes two BWPs. For example, when the network environment in which the current communication is situated allows two or more BWPs to be simultaneously activated in one cell, the first message may include a DC location of communication corresponding to any two of all the BWPs configured by the network device for the terminal. For another example, when the network environment in which the current communication is situated allows only one BWP to be activated at a time in one cell, the first message does not need to include a DC location of communication corresponding to two BWPs in one cell. Certainly, in some embodiments, a DC location of communication corresponding to any two activated BWPs in all the BWPs configured by the network device for the terminal is reported without considering a requirement of the network environment in which the current communication is situated. In this way, it is ensured that the first message can cover all possible scenarios in which a plurality of BWPs are simultaneously activated.

In a possible design, P is an integer less than or equal to $C_M^2$. In this solution, a quantity of DC locations in the first message is determined. In other words, the first message may include DC locations of communication corresponding to all combinations, each of which includes two BWPs that may be simultaneously activated in the BWPs configured by the network device for the terminal. It can be understood that in some other implementations of this application, if the requirement of the network environment in which current communication is situated is considered, the quantity of Ps may be appropriately adjusted. For example, when the network environment in which the current communication is situated allows only one BWP to be activated at a time in one cell, P may be $C_M^2 - Q \times C_S^2$, where Q is a quantity of cells configured by the network device for the terminal, and S is a quantity of BWPs in each cell.

In a possible design, any one of the P DC locations is a resource element (RE) location. In this solution, it can be ensured that the DC location of the current communication determined by the network device based on the first message is an available location.

In a possible design, the first message further includes a cell identity indicating a cell (cell) in which each of the P DC locations is located. In this solution, the terminal may further report a cell identity of each possible DC location of communication in the first message, so that the network device can more clearly determine the corresponding DC location of the current communication.

In a possible design, the method further includes: The terminal receives a second message, where the second message indicates the terminal to report the DC location corresponding to the any two of the M BWPs that are configured by the network device for the terminal. In this solution, the terminal may send, to the network device according to an indication of the network device such as the second message, the corresponding DC location that is corresponding to the communication when a plurality of BWPs may be simultaneously activated. In some other possible implementations, the terminal may alternatively report the first message based on a status of the terminal, for example, report the first message based on a specific periodicity. For another example, the terminal reports the first message after all possible DC locations of the communication are determined.

In a possible design, the first message further includes a DC location corresponding to each of the M BWPs that are configured by the network device for the terminal. In this solution, the terminal may further report the DC location corresponding to each BWP to the network device, so that the network device may further determine, based on the first message, the DC location that is corresponding to the current communication when only one BWP is activated. According to a fifth aspect, a message processing method is provided. The method includes: A network device receives a first message, where the first message indicates P direct current DC locations, each of the P DC locations is a DC location corresponding to any two bandwidth parts (BWP) in a CC pair (pair) composed of any two of A component carriers (CC) that are configured by the network device for a terminal, the any two BWPs are respectively located in different CCs in the CC pair, P is an integer greater than or equal to 1, and A is an integer greater than 2; and the network device determines a DC location of current communication based on the first message.

In this solution, the network device may determine the DC location of the current communication based on the first message transmitted by the terminal. In this example, when the network device configures three or more CCs for the terminal, the first message may include DC locations in a case in which every two of all BWPs in the CCs that may be simultaneously activated are activated, where the DC locations are transmitted by the terminal. The first message may be reported on a CC basis. For example, the network device configures three CCs for the terminal: a CC 1, a CC 2, and a CC 3. In this case, any one BWP selected from the CC 1 and any one BWP selected from the CC 2 form a combination of two BWPs, the combination of two BWPs may be corresponding to one DC location, and the first message may include the DC location corresponding to a CC pair composed of the CC 1 and the CC 2. Similarly, the first message may further include DC locations corresponding to other possible combinations in the CC pair composed of the CC 1 and the CC 2, where each combination includes two BWPs. In some implementations, DC locations corresponding to the CC pair composed of the CC 1 and the CC 2 may include all possible DC locations corresponding to combinations, where each combination includes one BWP in the CC 1 and one BWP in the CC 2. Similarly, the first message may further include all possible DC locations corresponding to a CC pair composed of the CC 1 and the CC 3. The first message may further include all possible DC locations corresponding to a CC pair composed of the CC 2 and the CC 3. In this way, the network device can learn, from the first message, a possible DC location when any CC pair in all the CCs currently configured for the terminal is activated. When the DC location of the current communication needs to be determined, the network device may determine, based on the first message, the DC location when the corresponding CC pair is activated. In some implementations, the DC location of the current communication may be one of the P DC locations. In some other implementations, the DC location of the current communication may be alternatively determined based on one or more of the P DC locations.

In a possible design, in at least two currently activated CCs, a first CC with a lowest carrier frequency and a second CC with a highest carrier frequency form a first CC pair, and in the first CC pair, a BWP currently in an activated state forms a first BWP combination. That the network device determines a DC location of current communication based on the first message includes: The network device obtains, through query from the P DC locations, a DC location corresponding to the first BWP combination in the first CC pair as the DC location of the current communication. Based on this solution, a solution in which the network device determines the DC location of the current communication is provided. In this example, if two CCs are simultaneously activated, the network device may query a CC pair composed of the two activated CCs in the first message. The network device may further query, based on a combination of two BWPs respectively activated in the two currently activated CCs, the corresponding CC pair in the first message for the combinations of BWPs corresponding to the combination of two activated BWPs, where each combination includes two BWPs; and determine a corresponding DC location. In this embodiment of this application, an example is used in which the DC location that is in the first message and that is corresponding to the combination of two BWPs composed of the activated BWPs in the currently activated CC pair is used as the current DC location. In some other implementations, after determining the corresponding DC location in the first message, the network device may further determine the DC location of the current communication based on the DC location depending on an actual situation. In other words, the DC location of the current communication may be a DC location that is the same as or different from the corresponding DC location in the first message. Similarly, when the network device determines that three or more CCs are simultaneously activated, the network device may use, as a CC pair corresponding to the current communication, a CC with a highest carrier frequency and a CC with a lowest carrier frequency in the simultaneously activated CCs. Therefore, the DC location of the current communication is determined by using a solution similar to the foregoing solution in which two CCs are simultaneously activated. It should be noted that in some other implementations of this application, the network device can further flexibly adjust, depending on a specific situation, for example, a specific configuration condition of a network, the CC pair corresponding to the current communication. In other words, based on the specific configuration condition of the network, the CC pair used to determine the DC location of the current communication may not be composed of the CC with the highest carrier frequency and the CC with the lowest carrier frequency, but may be determined based on the specific configuration condition of the network. After the CC pair corresponding to the current communication is determined, the DC location of the current communication can be determined according to the foregoing solution.

In a possible design, the first message includes an indication flag bit. The indication flag bit indicates that the P DC locations are related to a downlink CC of the terminal, indicates that the P DC locations are related to an uplink CC of the terminal, or indicates that one or more of the P DC locations are related to a downlink CC of the terminal or related to an uplink CC of the terminal.

In a possible design, the first message further indicates that the P DC locations are related to the downlink CC of the terminal. The P DC locations specifically include a DC location corresponding to any two BWPs in a CC pair composed of any two of A downlink CCs that are configured by the network device for the terminal, and the any two BWPs are respectively located in different CCs in the CC pair. Further, the first message may indicate that the DC location of the current communication of the terminal is related to a configured downlink CC or related to an activated downlink CC. In this solution, when the DC location of the terminal depends on a downlink CC of the terminal, the terminal may report a DC location corresponding to the downlink CC to the network device, so that the network device can more clearly determine the corresponding DC location of the current communication.

Further, the first message further indicates a downlink CC corresponding to each of the P DC locations and a status of the downlink CC. For example, a configured downlink CC 1 and an activated downlink CC 2 are corresponding to M DC locations, and an activated downlink CC 1 and a configured downlink CC 2 are corresponding to N DC locations. In a possible design, the method further includes: If the DC location of the current communication does not overlap a location of an uplink resource of the terminal, or at least one DC location that is in the P DC locations indicated by the first message and that is used to determine the DC location of the current communication cannot be determined or is outside the uplink resource, the network device determines not to process the DC location of the current communication. The uplink resource includes at least one of the following: a configured uplink CC, a configured BWP in the configured uplink CC, an activated BWP in the configured uplink CC, a configured BWP in an activated uplink CC, and an activated BWP in the activated uplink CC. This solution can avoid a problem that the network device optimizes data based on an incorrect DC location, resulting in poor performance of optimized data.

In a possible design, the first message further indicates that the P DC locations are related to the uplink CC of the terminal. The P DC locations specifically include a DC location corresponding to any two BWPs in a CC pair composed of any two of A uplink CCs that are configured by the network device for the terminal, and the any two BWPs are respectively located in different CCs in the CC pair. Further, the first message may indicate that the DC location of the current communication of the terminal is related to a configured uplink CC or related to an activated uplink CC. In this solution, when the DC location of the terminal depends on an uplink CC of the terminal, the terminal may report a DC location corresponding to the uplink CC to the network device, so that the network device can more clearly determine the corresponding DC location of the current communication.

In a possible design, any one of the P DC locations is a resource element RE location. In this solution, it can be ensured that the DC location of the current communication determined by the network device based on the first message is an available location.

In a possible design, the first message further includes a cell identity indicating a cell cell in which each of the P DC locations is located. In this solution, the terminal may further report a cell identity of each possible DC location of communication in the first message, so that the network device can more clearly determine the corresponding DC location of the current communication.

In a possible design, the method further includes: The network device sends a second message, where the second message indicates the terminal to send the first message. In some other implementations of this application, the second message may indicate the terminal to send the P DC locations, or indicate the terminal to send the P DC locations in another manner. In this solution, the network device may proactively send the second message to the terminal, to indicate the terminal to send the corresponding first message. For example, the first message may include the P DC locations and information corresponding to the P DC locations.

In a possible design, the first message is borne by using a media access control control element MAC CE. Alternatively, the first message is borne by using a physical control channel or a physical data channel. The physical control channel may be a physical uplink control channel PUCCH, and the data channel may be a physical uplink shared channel PUSCH. Correspondingly, the second message may be borne by using downlink control information DCI. According to a sixth aspect, a message processing method is provided. The method includes: A terminal sends a first message, where the first message indicates P direct current DC locations, each of the P DC locations is a DC location corresponding to any two bandwidth parts (BWP) in a CC pair (pair) composed of any two of A component carriers (CC) that are configured by a network device for the terminal, the any two BWPs are respectively located in different CCs in the CC pair, P is an integer greater than or equal to 1, and A is an integer greater than 2.

In this solution, the terminal may transmit the first message to the network device, so that the network device may determine a DC location of current communication based on the first message transmitted by the terminal. In this example, when the network device configures three or more CCs for the terminal, the first message may include DC locations in a case in which every two of all BWPs in the CCs that may be simultaneously activated are activated, where the DC locations are transmitted by the terminal. The first message may be reported on a CC basis. For example, the network device configures three CCs for the terminal: a CC 1, a CC 2, and a CC 3. In this case, any one BWP selected from the CC 1 and any one BWP selected from the CC 2 form a combination of two BWPs, the combination of two BWPs may be corresponding to one DC location, and the first message may include the DC location corresponding to a CC pair composed of the CC 1 and the CC 2. Similarly, the first message may further include DC locations corresponding to other possible combinations in the CC pair composed of the CC 1 and the CC 2, where each combination includes two BWPs. In some implementations, DC locations corresponding to the CC pair composed of the CC 1 and the CC 2 may include all possible DC locations corresponding to combinations, where each combination includes one BWP in the CC 1 and one BWP in the CC 2. Similarly, the first message may further include all possible DC locations corresponding to a CC pair composed of the CC 1 and the CC 3. The first message may further include all possible DC locations corresponding to a CC pair composed of the CC 2 and the CC 3. In this way, by using the first message sent by the terminal, the network device can learn, from the first message, a possible DC location when any CC pair in all the CCs currently configured for the terminal is activated. When the DC location of the current communication needs to be determined, the network device may determine, based on the first message, the DC location when the corresponding CC pair is activated. In some implementations, the DC location of the current communication may be one of the P DC locations. In some other implementations, the DC location of the current communication may be alternatively determined based on one or more of the P DC locations.

In a possible design, the first message includes an indication flag bit. The indication flag bit indicates that the P DC locations are related to a downlink CC of the terminal, indicates that the P DC locations are related to an uplink CC of the terminal, or indicates that one or more of the P DC locations are related to a downlink CC of the terminal or related to an uplink CC of the terminal.

In a possible design, the first message further indicates that the P DC locations are related to the downlink CC of the terminal. The P DC locations specifically include a DC location corresponding to any two BWPs in a CC pair composed of any two of A downlink CCs that are configured by the network device for the terminal, and the any two BWPs are respectively located in different CCs in the CC pair. Further, the first message may indicate that the DC location of the current communication of the terminal is related to a configured downlink CC or related to an activated downlink CC. In this solution, when the DC location of the terminal depends on a downlink CC of the terminal, the terminal may report a DC location corresponding to the downlink CC to the network device, so that the network device can more clearly determine the corresponding DC location of the current communication.

In a possible design, if at least one of the P DC locations does not overlap a location of an uplink resource of the terminal, the first message further indicates that the at least one DC location cannot be determined or is outside the uplink resource of the terminal. The uplink resource includes at least one of the following: a configured uplink CC and a configured BWP in the configured uplink CC. This solution can avoid a problem that the network device optimizes data based on an incorrect DC location, resulting in poor performance of optimized data.

Further, the first message further indicates a downlink CC corresponding to each of the P DC locations and a status of the downlink CC. For example, a configured downlink CC 1 and an activated downlink CC 2 are corresponding to M DC locations, and an activated downlink CC 1 and a configured downlink CC 2 are corresponding to N DC locations. In a possible design, the first message further indicates that the P DC locations are related to the uplink CC of the terminal. The P DC locations specifically include a DC location corresponding to any two BWPs in a CC pair composed of any two of A uplink CCs that are configured by the network device for the terminal, and the any two BWPs are respectively located in different CCs in the CC pair. Further, the first message may indicate that the DC location of the current communication of the terminal is related to a configured uplink CC or related to an activated uplink CC. In this solution, when the DC location of the terminal depends on an uplink CC of the terminal, the terminal may report a DC location corresponding to the uplink CC to the network device, so that the network device can more clearly determine the corresponding DC location of the current communication.

In a possible design, any one of the P DC locations is a resource element RE location. In this solution, it can be ensured that after the terminal sends the first message, the DC location of the current communication determined by the network device based on the first message is an available location.

In a possible design, the first message further includes a cell identity indicating a cell cell in which each of the P DC locations is located. In this solution, the terminal may further report a cell identity of each possible DC location of communication in the first message, so that the network device can more clearly determine the corresponding DC location of the current communication.

In a possible design, the method further includes: The terminal receives a second message, where the second message indicates the terminal to send the first message. Based on this solution, a triggering mechanism for transmitting the first message is provided. For example, the terminal may send the first message upon triggering by the second message sent by the network device.

In a possible design, the first message is borne by using a media access control control element MAC CE. Alternatively, the first message is borne by using a physical control channel or a physical data channel. The physical control channel may be a physical uplink control channel PUCCH, and the data channel may be a physical uplink shared channel PUSCH. Correspondingly, the second message may be borne by using downlink control information DCI.

According to a seventh aspect, a network device is provided. The network device includes a receiving unit and a determining unit. The receiving unit is configured to receive a first message, where the first message includes a DC location of each of M bandwidth parts (BWP) that are configured by the network device for a terminal; and the determining unit is configured to determine a DC location of current communication based on DC locations of N activated BWPs in the M BWPs, where M is an integer greater than or equal to 2, and N is an integer greater than or equal to 2 and less than M.

In a possible design, the determining unit is configured to determine the DC location of the current communication based on a first frequency corresponding to a DC location of a first BWP and a second frequency corresponding to a DC location of a second BWP. A frequency corresponding to the DC location of the current communication is a center frequency of the first frequency and the second frequency. The first BWP is a BWP that is in the N BWPs and whose DC location is corresponding to a lowest frequency, and the second BWP is a BWP that is in the N BWPs and whose DC location is corresponding to a highest frequency.

In a possible design, a center frequency of frequencies corresponding to DC locations of any two of the M BWPs is a frequency corresponding to a resource element RE location.

According to an eighth aspect, a terminal is provided. The terminal includes a sending unit. The sending unit is configured to send a reporting message, where the reporting message includes a DC location of each of M bandwidth parts (BWP) that are configured by a network device for the terminal, a center frequency of frequencies corresponding to DC locations of any two of the M BWPs is a frequency corresponding to a resource element (RE) location, and M is an integer greater than or equal to 2.

According to a ninth aspect, a network device is provided. The network device includes a receiving unit and a determining unit. The receiving unit is configured to receive a first message, where the first message includes P DC locations, each of the P DC locations is a DC location corresponding to any two of M bandwidth parts (BWP) that are configured by the network device for a terminal, P is an integer greater than or equal to 1, and M is an integer greater than or equal to 2; and the determining unit is configured to determine a DC location of current communication based on the first message.

In a possible design, P is an integer less than or equal to $C_M^2$.

In a possible design, any one of the P DC locations is a resource element (RE) location.

In a possible design, the determining unit is configured to determine a DC location corresponding to a first BWP and a second BWP in N activated BWPs in the M BWPs as the DC location of the current communication, where the DC location corresponding to the first BWP and the second BWP is one of the P DC locations, the first BWP is a BWP with a lowest frequency location in the N BWPs, the second BWP is a BWP with a highest frequency location in the N BWPs, and N is an integer greater than or equal to 2 and less than M.

In a possible design, the first message further includes a cell identity indicating a cell cell in which each of the P DC locations is located.

In a possible design, the network device further includes a sending unit. The sending unit is configured to send a second message, where the second message indicates the terminal to report the DC location corresponding to the any two of the M BWPs that are configured by the network device for the terminal.

According to a tenth aspect, a terminal is provided. The terminal includes a sending unit. The sending unit is configured to send a first message, where the first message includes P DC locations, each of the P DC locations is a DC location corresponding to any two of M bandwidth parts BWPs that are configured by a network device for the terminal, P is an integer greater than or equal to 1, and M is an integer greater than or equal to 2.

In a possible design, P is an integer less than or equal to $C_M^2$.

In a possible design, any one of the P DC locations is a resource element (RE) location.

In a possible design, the first message further includes a cell identity indicating a cell (cell) in which each of the P DC locations is located.

In a possible design, the terminal further includes a receiving unit. The receiving unit is configured to receive a second message, where the second message indicates the terminal to report the DC location corresponding to the any two of the M BWPs that are configured by the network device for the terminal.

According to an eleventh aspect, a network device is provided. The network device may include: a receiving unit, configured to receive a first message, where the first message indicates P direct current DC locations, each of the P DC locations is a DC location corresponding to any two bandwidth parts (BWP) in a CC pair (pair) composed of any two of A component carriers (CC) that are configured by the network device for a terminal, the any two BWPs are respectively located in different CCs in the CC pair, P is an integer greater than or equal to 1, and A is an integer greater than 2; and a determining unit, configured to determines a DC location of current communication based on the first message.

In a possible design, in at least two currently activated CCs, a first CC with a lowest carrier frequency and a second CC with a highest carrier frequency form a first CC pair, and in the first CC pair, a BWP currently in an activated state forms a first BWP combination. The determining unit is configured to obtain, through query from the P DC locations, a DC location corresponding to the first BWP combination in the first CC pair as the DC location of the current communication.

In a possible design, the first message includes an indication flag bit. The indication flag bit indicates that the P DC locations are related to a downlink CC of the terminal, indicates that the P DC locations are related to an uplink CC of the terminal, or indicates that one or more of the P DC locations are related to a downlink CC of the terminal or related to an uplink CC of the terminal.

In a possible design, the first message further indicates that the P DC locations are related to the downlink CC of the terminal. The P DC locations specifically include a DC location corresponding to any two BWPs in a CC pair composed of any two of A downlink CCs that are configured by the network device for the terminal, and the any two BWPs are respectively located in different CCs in the CC pair. Further, the first message may indicate that the DC location of the current communication of the terminal is related to a configured downlink CC or related to an activated downlink CC.

Further, the first message further indicates a downlink CC corresponding to each of the P DC locations and a status of the downlink CC. For example, a configured downlink CC 1 and an activated downlink CC 2 are corresponding to M DC locations, and an activated downlink CC 1 and a configured downlink CC 2 are corresponding to N DC locations. In a possible design, the determining unit is further configured to: if the DC location of the current communication does not overlap a location of an uplink resource of the terminal, or at least one DC location that is in the P DC locations indicated by the first message and that is used to determine the DC location of the current communication cannot be determined or is outside the uplink resource, determine not to process the DC location of the current communication. The uplink resource includes at least one of the following: a configured uplink CC, a configured BWP in the configured uplink CC, an activated BWP in the configured uplink CC, a configured BWP in an activated uplink CC, and an activated BWP in the activated uplink CC.

In a possible design, the first message further indicates that the P DC locations are related to the uplink CC of the terminal. The P DC locations specifically include a DC location corresponding to any two BWPs in a CC pair composed of any two of A uplink CCs that are configured by the network device for the terminal, and the any two BWPs are respectively located in different CCs in the CC pair. Further, the first message may indicate that the DC location of the current communication of the terminal is related to a configured uplink CC or related to an activated uplink CC.

In a possible design, any one of the P DC locations is a resource element RE location.

In a possible design, the first message further includes a cell identity indicating a cell cell in which each of the P DC locations is located.

In a possible design, the network device may further include a sending unit, configured to send a second message, where the second message indicates the terminal to send the first message.

In a possible design, the first message is borne by using a media access control control element MAC CE. Alternatively, the first message is borne by using a physical control channel or a physical data channel. The physical control channel may be a physical uplink control channel PUCCH, and the data channel may be a physical uplink shared channel PUSCH. Correspondingly, the second message may be borne by using downlink control information DCI. According to a twelfth aspect, a terminal is provided. The terminal may include a sending unit, configured to send a first message, where the first message indicates P direct current DC locations, each of the P DC locations is a DC location corresponding to any two bandwidth parts (BWP) in a CC pair (pair) composed of any two of A component carriers (CC) that are configured by a network device for the terminal, the any two BWPs are respectively located in different CCs in the CC pair, P is an integer greater than or equal to 1, and A is an integer greater than 2.

In a possible design, the first message includes an indication flag bit. The indication flag bit indicates that the P DC locations are related to a downlink CC of the terminal, indicates that the P DC locations are related to an uplink CC of the terminal, or indicates that one or more of the P DC locations are related to a downlink CC of the terminal or related to an uplink CC of the terminal.

In a possible design, the first message further indicates that the P DC locations are related to the downlink CC of the terminal. The P DC locations specifically include a DC location corresponding to any two BWPs in a CC pair composed of any two of A downlink CCs that are configured by the network device for the terminal, and the any two BWPs are respectively located in different CCs in the CC pair. Further, the first message may indicate that a DC location of current communication of the terminal is related to a configured downlink CC or related to an activated downlink CC. In this solution, when the DC location of the terminal depends on a downlink CC of the terminal, the terminal may report a DC location corresponding to the downlink CC to the network device, so that the network device can more clearly determine the corresponding DC location of the current communication.

In a possible design, if at least one of the P DC locations does not overlap a location of an uplink resource of the terminal, the first message further indicates that the at least one DC location cannot be determined or is outside the uplink resource of the terminal. The uplink resource includes at least one of the following: a configured uplink CC and a configured BWP in the configured uplink CC. This solution can avoid a problem that the network device optimizes data based on an incorrect DC location, resulting in poor performance of optimized data.

Further, the first message further indicates a downlink CC corresponding to each of the P DC locations and a status of the downlink CC. For example, a configured downlink CC 1 and an activated downlink CC 2 are corresponding to M DC locations, and an activated downlink CC 1 and a configured downlink CC 2 are corresponding to N DC locations. In a possible design, the first message further indicates that the P DC locations are related to the uplink CC of the terminal. The P DC locations specifically include a DC location corresponding to any two BWPs in a CC pair composed of any two of A uplink CCs that are configured by the network device for the terminal, and the any two BWPs are respectively located in different CCs in the CC pair. Further, the first message may indicate that the DC location of the current communication of the terminal is related to a configured uplink CC or related to an activated uplink CC. In this solution, when the DC location of the terminal depends on an uplink CC of the terminal, the terminal may report a DC location corresponding to the uplink CC to the network device, so that the network device can more clearly determine the corresponding DC location of the current communication.

In a possible design, any one of the P DC locations is a resource element RE location.

In a possible design, the first message further includes a cell identity indicating a cell cell in which each of the P DC locations is located.

In a possible design, the terminal further includes a receiving unit, configured to receive a second message, where the second message indicates the terminal to send the first message.

In a possible design, the first message is borne by using a media access control control element MAC CE. Alternatively, the first message is borne by using a physical control channel or a physical data channel. The physical control channel may be a physical uplink control channel PUCCH, and the data channel may be a physical uplink shared channel PUSCH. Correspondingly, the second message may be borne by using downlink control information DCI. According to a thirteenth aspect, a network device is provided. The network device includes one or more processors and one or more memories. The one or more memories are coupled to the one or more processors, and the one or more memories store computer instructions. When the one or more processors execute the computer instructions, the network device is enabled to perform the message processing method according to any one of the first aspect or the possible designs of the first aspect.

According to a fourteenth aspect, a terminal is provided. The terminal includes one or more processors and one or more memories. The one or more memories are coupled to the one or more processors, and the one or more memories store computer instructions. When the one or more processors execute the computer instructions, the terminal is enabled to perform the message processing method according to the second aspect.

According to a fifteenth aspect, a network device is provided. The network device includes one or more processors and one or more memories. The one or more memories are coupled to the one or more processors, and the one or more memories store computer instructions. When the one or more processors execute the computer instructions, the network device is enabled to perform the message processing method according to any one of the third aspect or the possible designs of the first aspect.

According to a sixteenth aspect, a terminal is provided. The terminal includes one or more processors and one or more memories. The one or more memories are coupled to the one or more processors, and the one or more memories store computer instructions. When the one or more processors execute the computer instructions, the terminal is enabled to perform the message processing method according to any one of the fourth aspect or the possible designs of the fourth aspect.

According to a seventeenth aspect, a network device is provided. The network device includes one or more processors and one or more memories. The one or more memories are coupled to the one or more processors, and the one or more memories store computer instructions. When the one or more processors execute the computer instructions, the network device is enabled to perform the message processing method according to any one of the fifth aspect or the possible designs of the fifth aspect.

According to an eighteenth aspect, a terminal is provided. The terminal includes one or more processors and one or more memories. The one or more memories are coupled to the one or more processors, and the one or more memories store computer instructions. When the one or more processors execute the computer instructions, the terminal is enabled to perform the message processing method according to any one of the sixth aspect or the possible designs of the sixth aspect.

According to a nineteenth aspect, a chip system is provided. The chip system includes a processing circuit and an interface. The processing circuit is configured to invoke a computer program from a storage medium and run the computer program stored in the storage medium, to perform the message processing method according to any one of the first aspect or the possible designs of the first aspect.

According to a twentieth aspect, a chip system is provided. The chip system includes a processing circuit and an interface. The processing circuit is configured to invoke a computer program from a storage medium and run the computer program stored in the storage medium, to perform the message processing method according to the second aspect.

According to a twenty-first aspect, a chip system is provided. The chip system includes a processing circuit and an interface. The processing circuit is configured to invoke a computer program from a storage medium and run the computer program stored in the storage medium, to perform the message processing method according to any one of the third aspect or the possible designs of the third aspect.

According to a twenty-second aspect, a chip system is provided. The chip system includes a processing circuit and an interface. The processing circuit is configured to invoke a computer program from a storage medium and run the computer program stored in the storage medium, to perform the message processing method according to any one of the fourth aspect or the possible designs of the fourth aspect.

According to a twenty-third aspect, a chip system is provided. The chip system includes a processing circuit and an interface. The processing circuit is configured to invoke a computer program from a storage medium and run the computer program stored in the storage medium, to perform the message processing method according to any one of the fifth aspect or the possible designs of the fifth aspect.

According to a twenty-fourth aspect, a chip system is provided. The chip system includes a processing circuit and an interface. The processing circuit is configured to invoke a computer program from a storage medium and run the computer program stored in the storage medium, to perform the message processing method according to any one of the sixth aspect or the possible designs of the sixth aspect.

According to a twenty-fifth aspect, a computer-readable storage medium is provided. The computer-readable storage medium includes computer instructions. When the computer instructions are run, the message processing method according to any one of the first aspect and the possible designs of the first aspect is performed.

According to a twenty-sixth aspect, a computer-readable storage medium is provided. The computer-readable storage medium includes computer instructions. When the computer instructions are run, the message processing method according to the second aspect is performed.

According to a twenty-seventh aspect, a computer-readable storage medium is provided. The computer-readable storage medium includes computer instructions. When the computer instructions are run, the message processing method according to any one of the third aspect and the possible designs of the third aspect is performed.

According to a twenty-eighth aspect, a computer-readable storage medium is provided. The computer-readable storage medium includes computer instructions. When the computer instructions are run, the message processing method according to any one of the fourth aspect and the possible designs of the fourth aspect is performed.

According to a twenty-ninth aspect, a computer-readable storage medium is provided. The computer-readable storage medium includes computer instructions. When the computer instructions are run, the message processing method according to any one of the fifth aspect and the possible designs of the fifth aspect is performed.

According to a thirtieth aspect, a computer-readable storage medium is provided. The computer-readable storage medium includes computer instructions. When the computer instructions are run, the message processing method according to any one of the sixth aspect and the possible designs of the sixth aspect is performed.

According to a thirty-first aspect, a communication system is provided. The communication system includes one or more network devices and one or more terminals. When the communication system runs, the message processing method according to any one of the first aspect or the possible designs of the first aspect and the message processing method according to the second aspect can be implemented.

According to a thirty-second aspect, a communication system is provided. The communication system includes one or more network devices and one or more terminals. When the communication system runs, the message processing method according to any one of the third aspect or the possible designs of the third aspect and the message processing method according to the fourth aspect can be implemented.

According to a thirty-third aspect, a communication system is provided. The communication system includes one or more network devices and one or more terminals. When the communication system runs, the message processing method according to any one of the fifth aspect or the possible designs of the fifth aspect and the message processing method according to the sixth aspect can be implemented.

According to a thirty-fourth aspect, a computer program product including instructions is provided. When the computer program product is run on a computer, the computer is enabled to perform the message processing method according to any one of the first aspect or the possible designs of the first aspect.

According to a thirty-fifth aspect, a computer program product including instructions is provided. When the computer program product is run on a computer, the computer is enabled to perform the message processing method according to the second aspect.

According to a thirty-sixth aspect, a computer program product including instructions is provided. When the computer program product is run on a computer, the computer is enabled to perform the message processing method according to any one of the third aspect or the possible designs of the third aspect.

According to a thirty-seventh aspect, a computer program product including instructions is provided. When the computer program product is run on a computer, the computer is enabled to perform the message processing method according to any one of the fourth aspect or the possible designs of the fourth aspect.

According to a thirty-eighth aspect, a computer program product including instructions is provided. When the computer program product is run on a computer, the computer is enabled to perform the message processing method according to any one of the fifth aspect or the possible designs of the fifth aspect.

According to a thirty-ninth aspect, a computer program product including instructions is provided. When the computer program product is run on a computer, the computer is enabled to perform the message processing method according to any one of the sixth aspect or the possible designs of the sixth aspect.

It should be understood that for beneficial effects of the network device, the terminal, the chip system, the computer-readable storage medium, the communication system, or the computer program product that are provided in the seventh aspect to the thirty-ninth aspect, refer to beneficial effects of the method embodiments provided in the foregoing corresponding aspects. Details are not described herein again.

**BRIEF DESCRIPTION OF DRAWINGS**

FIG. 1 is a schematic diagram of composition of a communication system according to an embodiment of this application;

FIG. 2 is a schematic flowchart of a message processing method according to an embodiment of this application;

FIG. 3 is a schematic diagram of determining a DC location of current communication according to an embodiment of this application;

FIG. 4 is another schematic flowchart of a message processing method according to an embodiment of this application;

FIG. 5 is a schematic diagram of a message 2 according to an embodiment of this application;

FIG. 6 is another schematic diagram of a message 2 according to an embodiment of this application;

FIG. 7 is a schematic diagram of determining a DC location of current communication according to an embodiment of this application;
FIG. 8 is a schematic diagram of composition of a network device according to an embodiment of this application;
FIG. 9 is a schematic diagram of composition of a terminal according to an embodiment of this application;
FIG. 10 is a schematic diagram of composition of a network device according to an embodiment of this application;
FIG. 11 is a schematic diagram of composition of a terminal according to an embodiment of this application;
FIG. 12 is another schematic diagram of composition of a network device according to an embodiment of this application;
FIG. 13 is another schematic diagram of composition of a terminal according to an embodiment of this application;
FIG. 14 is another schematic diagram of composition of a network device according to an embodiment of this application;
FIG. 15 is another schematic diagram of composition of a terminal according to an embodiment of this application;
FIG. 16 is a schematic diagram of composition of a chip system according to an embodiment of this application; and
FIG. 17 is another schematic diagram of composition of a chip system according to an embodiment of this application.

## DESCRIPTION OF EMBODIMENTS

In a communication process, a network device may determine, by using a DC location reported by a terminal, a frequency domain location of a local oscillator leakage (local oscillator leakage, lo leakage) corresponding to a cell carrier in the communication process, and further perform corresponding processing on the lo leakage location based on the frequency domain location. For example, a data block transmitted at a frequency corresponding to the lo leakage location is restored or selectively discarded, to improve quality of data transmission on the cell carrier.

In a long term evolution (Long Term Evolution, LTE) system, it is generally considered by default that a DC location is generally on a resource element (resource element, RE) at a frequency domain center of a corresponding cell carrier. In other words, a frequency corresponding to the DC location corresponding to a cell is generally at a central frequency of frequency domain bandwidth corresponding to the corresponding cell carrier. The network device may determine the DC location based on the frequency domain bandwidth corresponding to the cell carrier, and perform targeted processing on the DC location.

Different from the LTE system, in a fifth generation mobile communication technology (5th generation mobile networks, 5G) system, a frequency corresponding to a DC location may be set at any location on frequency domain bandwidth corresponding to the cell carrier. Therefore, the network device needs to determine, by using the DC location reported by the terminal, a lo leakage location corresponding to the cell carrier, to perform corresponding processing based on the lo leakage location, thereby improving data transmission quality.

It should be noted that in the 5G system, the frequency domain bandwidth (or referred to as system operating bandwidth (Carrier bandwidth, CBW)) corresponding to the cell carrier may be divided into a plurality of different bandwidth parts (bandwidth part, BWP) for communication. Locations of the different BWPs on the cell carrier can be flexibly configured. Each BWP may be corresponding to one DC location. Therefore, when reporting DC locations to the network device, the terminal needs to report the DC location corresponding to each BWP to the network device, so that the network device determines a DC location of current communication based on a BWP activated in a current communication process. In this embodiment of this application, a BWP on the cell carrier may be referred to as a BWP of a cell.

For example, the network device may send an indication message to the terminal, to indicate the terminal to report a DC location of a BWP configured by the network device for the terminal. That the network device configures two cells (for example, a cell 1 and a cell 2) for the terminal and each cell includes two BWPs (for example, the cell 1 includes a BWP 11 and a BWP 12, and the cell 2 includes a BWP 21 and a BWP 22) is used as an example. After receiving the indication message for DC location reporting sent by the network device, the terminal may separately report DC locations of the BWPs to the network device. For example, a DC location DC 11 corresponding to the BWP 11, a DC location DC12 corresponding to the BWP 12, a DC location DC 21 corresponding to the BWP 21, and a DC location DC 22 corresponding to the BWP 22 are reported to the network device. In this way, during activation of a corresponding BWP, the network device may determine a frequency location of a lo leakage of current communication based on a corresponding DC location, and further optimize data transmission based on the frequency location.

It should be understood that in data transmission in the 5G system, there are still a large quantity of scenarios in which a plurality of BWPs are simultaneously activated to perform data transmission. For example, in a CA communication scenario such as intra-band CA (intra band CA) communication or inter-band CA (inter band CA) communication, in a plurality of cells configured by the network device for the terminal, there may be one activated BWP in each of two or more cells. In a whole transmission process, one CA communication process is corresponding to only one lo leakage location, and is accordingly corresponding to only one DC location. It can be understood that, at present, the network device can learn the DC location of each BWP according to the method in the foregoing description. However, when a plurality of BWPs are simultaneously activated, the network device cannot learn a DC location corresponding to communication, and cannot optimize data transmission based on the DC location.

To resolve the foregoing problem, an embodiment of this application provides a message processing method, so that the network device can learn a DC location that is corresponding to communication when a plurality of BWPs are simultaneously activated, and can proactively manage the communication based on the DC location, for example, perform corresponding processing on a data block corresponding to the DC location.

With reference to the accompanying drawings, the following details the message processing method provided in this embodiment of this application.

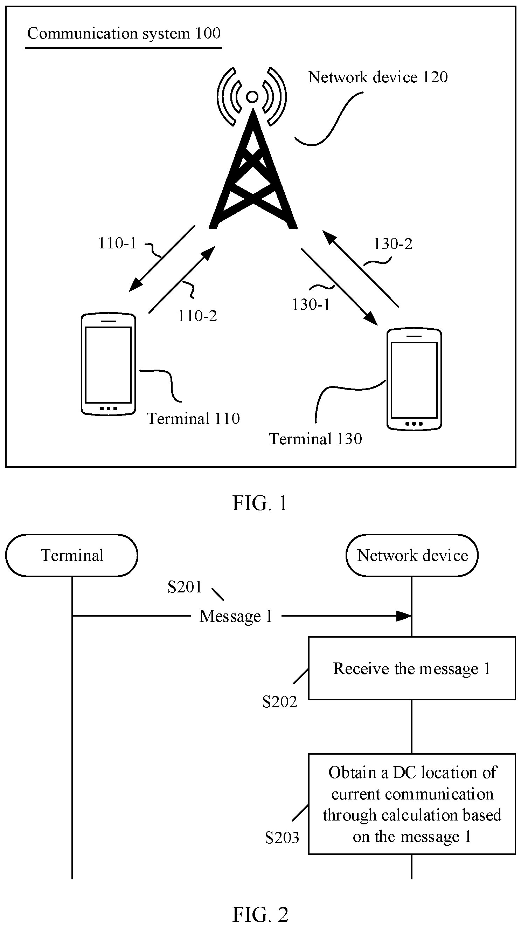

FIG. 1 is a schematic diagram of composition of a communication system 100 according to an embodiment of this application. As shown in FIG. 1, the communication system 100 may include a terminal 110 and a network device 120. The communication system 100 may further include a terminal other than the terminal 110. For example, the communication system 100 may further include a terminal 130 shown in FIG. 1. A quantity of terminals included in the communication system 100 is not limited in this embodiment of this application. The terminal (which may also be referred to as a terminal device) in this embodiment of this application may be an electronic device that can support 5G communication, for example, user equipment (user equipment, UE), a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR)/virtual reality (virtual reality, VR) device, or a media player. A specific form of the device is not particularly limited in this embodiment of this application.

In the communication system 100, the network device 120 may be a 5G gNB. It should be understood that in some other embodiments, the network device 120 may be alternatively a third generation mobile communication technology (3rd-Generation, 3G) NodeB or a fourth generation mobile communication technology (the 4th generation mobile communication technology, 4G) eNodeB that can support 5G communication, or another communication device. For example, when the network device 120 is a 5G gNB, a 5G new radio (new radio, NR) can be provided to perform 5G communication with other devices (such as the terminal 110 and/or the terminal 130). In some embodiments, the network device 120 may include a transmitter chain and a receiver chain. A person of ordinary skill in the art can understand that both the transmitter chain and the receiver chain may include a plurality of components (for example, a processor, a modulator, a multiplexer, an encoder, a demultiplexer, and an antenna) related to signal sending and receiving.

As shown in FIG. 1, the terminal 110 may communicate with the network device 120. The network device 120 may send information to the terminal 110 over a forward link 110-1 (which may also be referred to as a downlink), and receive information from the terminal 110 over a reverse link 110-2 (which may also be referred to as an uplink). Similarly, the terminal 130 may also communicate with the network device 120. The network device 120 sends information to the terminal 130 over a forward link 130-1, and receives information from the terminal 130 over a reverse link 130-2. In an example, the network device 120 performs data communication with the terminal 110. In some embodiments, the network device 120 may send a message A to the terminal 110 over the downlink 110-1, to indicate the terminal 110 to feed back, to the network device 120, a DC location corresponding to each BWP configured for the terminal 110. In response to the message A, the terminal 110 may send the DC location corresponding to each BWP to the network device 120 over the uplink 110-2. In some other embodiments, the network device may send a message B to the terminal 110 over a downlink 110-2, to indicate the terminal 110 to feed back, to the network device 120, DC locations of communication corresponding to all combinations, each of which includes any two BWPs that may be simultaneously activated in all the BWPs configured for the terminal 110. In response to the message B, the terminal 110 may send, to the network device 120 over the uplink 110-2, all the DC locations of communication corresponding to all the combinations, each of which includes two BWPs that may be activated in all the BWPs.

It should be noted that the communication system 100 may be a public land mobile network (Public Land Mobile Network, PLMN), a device-to-device (device-to-device, D2D) network, a machine-to-machine (machine to machine, M2M) network, or another network. FIG. 1 is merely an example of a simplified schematic diagram. The network may further include another network device that is not shown in FIG. 1.

The message processing method provided in this embodiment of this application can be applied to the communication system 100 shown in FIG. 1. With reference to the accompanying drawings, the following details the message processing method provided in this embodiment of this application. As shown in FIG. 2, the message processing method can be used to determine a DC location used for current communication. For example, the method may include S201 to S203.

S201: A terminal sends a message 1 to a network device.

The message 1 may include a DC location of each of M BWPs that are configured by the network device for the terminal, where M is an integer greater than or equal to 2.

For example, the network device configures three cells, for example, a cell 1, a cell 2, and a cell 3, for the terminal. Each cell includes four BWPs. For example, the cell 1 includes a BWP 11, a BWP 12, a BWP 13, and a BWP 14; the cell 2 includes a BWP 21, a BWP 22, a BWP 23, and a BWP 24; and the cell 3 includes a BWP 31, a BWP 32, a BWP 33, and a BWP 34.

It should be understood that DC locations of different BWPs are independently configured by the terminal. For example, the terminal may configure a DC 11 for the BWP 11, configure a DC 12 for the BWP 12, configure a DC 13 for the BWP 13, configure a DC 21 for the BWP 21, configure a DC 22 for the BWP 22, configure a DC 23 for the BWP 23, and configure a DC 31 for the BWP 31, configure a DC 32 for the BWP32 and configure a DC 33 for the BWP33.

The terminal may report, to the network device by using the message 1, the DC location corresponding to each BWP, so that the network device can learn a status of the DC location corresponding to each BWP. For example, in some embodiments, the message 1 may be a radio resource control (Radio Resource Control, RRC) message. For example, the message 1 may be an RRCReconfigurationComplete message or an RRCResumeComplete message.

In an example, the terminal may send, in the message 1 based on an agreed structure, the DC location corresponding to each BWP. In some implementations, when sending the DC location corresponding to each BWP, the terminal may send the DC location on a cell basis, where the cell is corresponding to the BWP. For example, the following shows a schematic structure of the message 1:

```
UplinkTxdirectCurrentList{
Cell 1{
UplinkTxdirectCurrentBWP{
BWP1: DC1
BWP2:DC2
BWP3:DC3
BWP4:DC4
}
}
Cell 2{
UplinkTxdirectCurrentBWP{
BWP1: DC1
BWP2:DC2
BWP3:DC3
BWP4:DC4
}
}
Cell 3{
UplinkTxdirectCurrentBWP{
BWP1: DC1
BWP2:DC2
BWP3:DC3
BWP4:DC4
}
}
}
```

It can be learned that in the cell 1, the terminal may send the DC 1 (that is, the foregoing DC 11) corresponding to the corresponding BWP 1 (that is, the foregoing BWP 11) and the DC 2 (that is, the foregoing DC 12) corresponding to the BWP 2 (that is, the foregoing BWP 21), and the DC 3 (that is, the foregoing DC 13) corresponding to the BWP 3 (that is, the foregoing BWP 31). Generally, because each cell carrier may include 3300 resource elements (resource element, RE). In other words, each cell carrier can provide 3300 frequencies for data transmission. Therefore, in some implementations of this application, for any DC location (for example, the DC 11 or the DC 12) configured by the terminal for a BWP, the DC location corresponding to the BWP may be identified by using a value in a range of 0 to 3301. 0 to 3299 may indicate frequencies corresponding to corresponding DC locations. 3300 may indicate that the DC location is not within a cell carrier range (that is, outside the carrier). 3301 may indicate that the DC location is unpredictable (that is, an undetermined position within the carrier).

It should be noted that in this embodiment of this application, the message 1 may be proactively reported by the terminal after receiving the M BWPs configured by the network device for the terminal, or may be reported according to an instruction of the network device. In an example, the network device may send a message 2 to the terminal, where the message 2 may indicate the terminal to report the DC location corresponding to each of the M BWPs that are configured for the terminal.

For example, the message 2 may be an RRC message. In some embodiments, the message 2 may be a CellGroupConfig message, and a reportUplinkTxdirectCurrent identifier included in the message 2 may indicate whether the terminal needs to report content corresponding to the message 1 (that is, the DC location corresponding to each BWP). For example, when the reportUplinkTxdirectCurrent identifier is set to true, the terminal may report, based on the message 2, the content corresponding to the message 1. Correspondingly, when the reportUplinkTxdirectCurrent identifier is set to null, the terminal does not need to report the content corresponding to the message 1. Certainly, a corresponding function of the message 2 may be alternatively implemented by using another RRC message or a non-RRC message. This is not limited in this embodiment of this application.

S202: The network device receives the message 1.

S203: The network device obtains a DC location of current communication through calculation based on the message 1.

After receiving the message 1, the network device can clearly learn DC locations corresponding to different BWPs. When communicating with the terminal, the network device may determine, based on an activated BWP, the DC location corresponding to the communication.

For example, in some embodiments, when only one of a plurality of configured BWPs is activated when the network device communicates with the terminal, the network device may determine, based on the message 1, a DC location corresponding to the activated BWP.

In some other embodiments, when a plurality of BWPs are simultaneously activated when the network device communicates with the terminal, the network device may also determine, based on the message 1, the DC location corresponding to the communication. The following details the method.

In some implementations, the network device may determine the DC location of the current communication based on a first frequency corresponding to a DC location of a first BWP and a second frequency corresponding to a DC location of a second BWP. A frequency corresponding to the DC location of the current communication is a center frequency of the first frequency and the second frequency. The first BWP is a BWP that is in the activated BWPs and whose DC location is corresponding to a lowest frequency, and the second BWP is a BWP that is in the activated BWPs and whose DC location is corresponding to a highest frequency.

The following describes execution of the foregoing method by using an example. For example, the network device still configures three cells, for example, a cell 1, a cell 2, and a cell 3, for the terminal. Each cell includes four BWPs. For example, the cell 1 includes a BWP 11, a BWP 12, a BWP 13, and a BWP 14; the cell 2 includes a BWP 21, a BWP 22, a BWP 23, and a BWP 24; and the cell 3 includes a BWP 31, a BWP 32, a BWP 33, and a BWP 34.

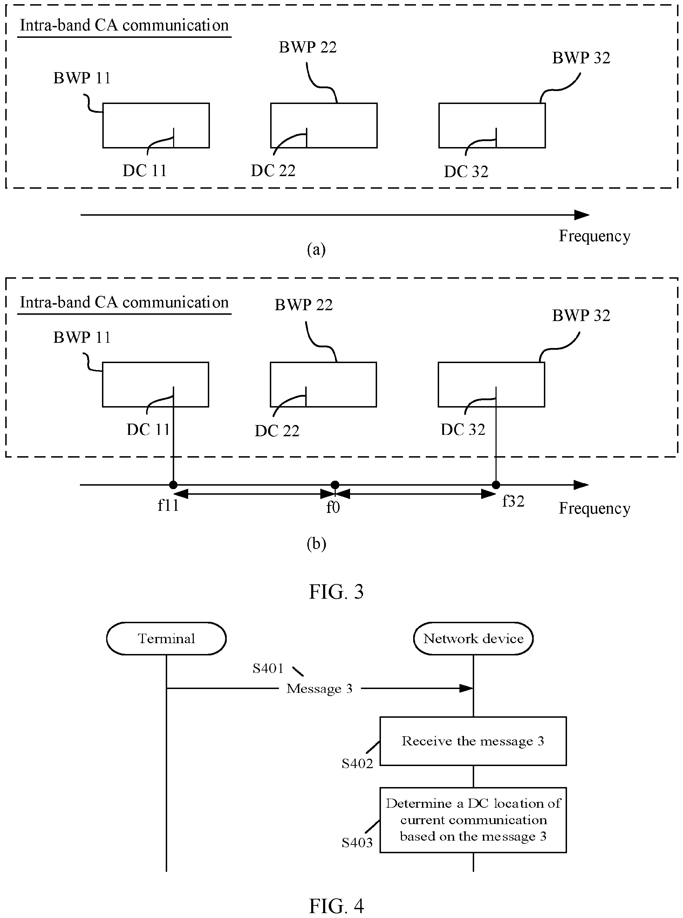

As shown in (a) in FIG. 3, a communication process is intra-band CA communication, and activated BWPs include the BWP 11, the BWP 22, and the BWP 32. A DC location corresponding to the BWP 11 is a DC 11, a DC location corresponding to the BWP 22 is a DC 22, and a DC location corresponding to the BWP 32 is a DC 32. Different DC locations are arranged in ascending order of corresponding frequencies: the DC 11, the DC 22, and the DC 32. The network device may select, based on frequency domain locations of the DC locations corresponding to the activated BWPs, a BWP (for example, the BWP 11) whose DC location is corresponding to a lowest frequency and a BWP (for example, the BWP 32) whose DC location is corresponding to a highest frequency, to determine the DC location corresponding to the communication. In an example, the network device may determine, based on the DC location corresponding to the BWP 11 and the DC location corresponding to the BWP 32, a center frequency of the frequencies corresponding to the two DC locations, and use a DC location with the center frequency as the DC location of the intra-band CA communication. For example, as shown in (b) in FIG. 3, a frequency of the DC 11 corresponding to the BWP 11 is f11, and a frequency of the DC 32 corresponding to the BWP 32 is f32. The network device may determine the center frequency $f0=(f11+f32)/2$ of the frequencies corresponding to the two DC locations, and use an RE location corresponding to f0 as the DC location of the current intra-band CA communication.

It should be understood that the foregoing uses an example for description in which three BWPs are simultaneously activated. In some other embodiments, when two or four or more BWPs are activated in intra-band CA communication, a method for determining a DC location corresponding to the intra-band CA communication is similar to that described above. Details are not described herein again.

In addition, in some other embodiments of this application, the network device may further determine the DC location of the current communication in another manner based on the DC location corresponding to each BWP provided in the message 1. In an example, in some implementations, the network device may determine the DC location of the current communication based on distribution of DC locations corresponding to all activated BWPs. For example, a communication process is the intra-band CA communication shown in (a) in FIG. 3. The network device may set a frequency f0 corresponding to the DC location of the intra-band CA communication to $(f11+f22+f32)/3$. In some other implementations, the network device may set different weights for all the activated BWPs based on data traffic, and determine the DC location of the communication based on the weights and the DC locations of all the activated BWPs. Therefore, when the network device optimizes data transmission based on the DC location of the communication, data transmission can be steered into frequencies that does not include a lo leakage which can increase a throughout, thereby improving an optimization effect.

It should be noted that the foregoing uses an example for description in which the DC location determined through calculation is used as the DC location of the current communication. In some other embodiments of this application, the network device may further use, as a to-be-selected DC location of the current communication, an RE location near an RE location in which the DC location determined through calculation is located, so that the network device can more accurately determine a local oscillator leakage location of the current communication based on the RE location. For example, the network device may use, as candidate DC locations of the current communication, all 12 RE locations in a resource block (resource block, RB) in which the DC location obtained through calculation is located. An interference status of each of the 12 RE locations is measured, and an RE location with greatest interference is determined as the DC location corresponding to the current communication. In this way, the determined DC location of the current communication has the largest interference in adjacent frequency domains. Therefore, a targeted operation is performed on the DC location, so that data transmission can be better optimized. Certainly, to reduce a data volume processed when the network device determines the DC location, in some other embodiments, the network device may further use two or more RE locations adjacent to an RE location corresponding to the DC location obtained through calculation as to-be-selected DC locations, separately perform interference measurement on the to-be-selected DC locations, and use an RE location with the greatest interference as the DC location of the current communication. Generally, the DC location corresponding to the communication is within a frequency domain range of a cell carrier configured by the network device for the terminal. In other words, the frequency corresponding to the DC location is one of frequencies corresponding to RE locations in the cell carrier. Therefore, in this embodiment of this application, when the terminal configures the DC location for each BWP configured by the network device for the terminal, it is also ensured that frequencies corresponding to DC locations when any two BWPs are activated are frequencies corresponding to RE locations. For example, when the terminal configures the DC location for each BWP, it needs to be ensured that a center frequency of frequencies corresponding to the DC locations of the any two BWPs is a frequency corresponding to an RE location. In this way, the DC location determined by using the solution shown in FIG. 2 or FIG. 3 is an available DC location.

In this solution, the network device may determine, with cooperation of the terminal based on a DC location of each BWP, a DC location of current communication when a plurality of BWPs are activated, for example, in the intra-band CA communication scenario in the foregoing example; and further perform optimization processing on the current communication based on the DC location. In addition, in this solution, the DC location of the communication when the plurality of BWPs are simultaneously activated is determined. This is conducive to testing and verifying corresponding radio frequency (Radio Frequency, RF) performance of the terminal and/or the network device in a development process.

FIG. 4 shows another message processing method according to an embodiment of this application. By using this method, a network device can obtain a DC location of current communication more quickly. As shown in FIG. 4, the method may include S401 to S403.

S401: A terminal sends a message 3 to the network device.

The message 3 may include P DC locations. Each of the P DC locations is a DC location corresponding to any two of M BWPs that are configured by the network device for the terminal, P is an integer greater than or equal to 1, and M is an integer greater than or equal to 2.

It should be understood that in different communication scenarios, if a plurality of BWPs are simultaneously activated, each of the simultaneously activated BWPs may be any one of the M BWPs that are configured by the network device for the terminal. Therefore, in this embodiment of this application, the terminal may send, to the network device, DC locations of the communication corresponding to all combinations, each of which includes any two activated BWPs in the plurality of BWPs that are configured by the network device for the terminal, so that the network device may determine, based on the DC locations, a DC location of any communication when the plurality of BWPs are activated.

In other words, in this example, P may be a positive integer less than or equal to $C_M^2$, and a specific value of P can be flexibly adjusted based on a protocol requirement corresponding to a network environment in which the communication is situated. For example, in the network environment in which the communication is situated, when two or more BWPs may be simultaneously activated in one cell, P is equal to $C_M^2$. In the network environment in which the communication is situated, when only one BWP is activated at a time in one cell, P is equal to $C_M^2 - Q \times C_S^2$, where Q is a quantity of cells allocated by the network device to the terminal, and S is a quantity of BWPs in each cell.

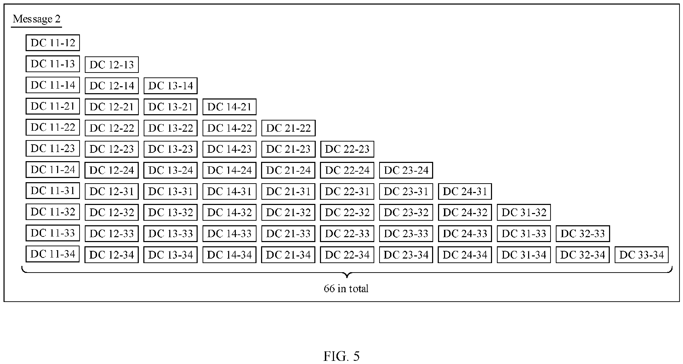

In an example, in some embodiments, in the network environment in which the communication is situated, two or more BWPs may be simultaneously activated in one cell. For example, the network device configures three cells, for example, a cell 1, a cell 2, and a cell 3, for the terminal. Each cell includes four BWPs. For example, the cell 1 includes a BWP 11, a BWP 12, a BWP 13, and a BWP 14; the cell 2 includes a BWP 21, a BWP 22, a BWP 23, and a BWP 24; and the cell 3 includes a BWP 31, a BWP 32, a BWP 33, and a BWP 34. The terminal may configure a corresponding DC location for corresponding communication when any two of the 12 BWPs are activated. In other words, two BWPs may be corresponding to one DC location of communication. For example, when the BWP 11 and the BWP 21 are simultaneously activated, the terminal may configure a DC location, namely, a DC 11-21, for corresponding communication. For another example, when the BWP 12 and the BWP 21 are simultaneously activated, the terminal may configure a DC location, namely, a DC 12-21, for corresponding communication. Similarly, the terminal may configure a DC location for communication corresponding to other combinations, each of which includes two activated BWPs. It can be understood that, as shown in FIG. 5, in this example, the terminal may allocate a total of $C_{12}^2 = 66$ DC locations for communication corresponding to combinations, each of which includes two activated BWPs in the 12 BWPs. The terminal may add the 66 locations and information corresponding to the BWPs to the message 3, and send the message 3 to the network device.

In some other embodiments, in a network in which the communication is situated, at most one BWP is activated at a time in one cell. In this case, the terminal may appropriately reduce quantities of BWP combinations and corresponding DC location information that are carried in the message 3. For example, the network device configures Q cells for the terminal, and S BWPs are configured for each cell, that is, the network device configures a total of Q × S=M BWPs for the terminal. In this case, the terminal may configure a total of $C_M^2 - Q \times C_S^2$ DC locations for communication corresponding to different possible combinations, each of which includes two BWPs, add the $C_M^2 - Q \times C_S^2$ DC locations to the message 3, and send the message 3 to the network device. For example, the network device still configures three cells, for example, a cell 1, a cell 2, and a cell 3, for the terminal. Each cell includes four BWPs. For example, the cell 1 includes a BWP 11, a BWP 12, a BWP 13, and a BWP 14; the cell 2 includes a BWP 21, a BWP 22, a BWP 23, and a BWP 24; and the cell 3 includes a BWP 31, a BWP 32, a BWP 33, and a BWP 34. The terminal may allocate a DC location, namely, a DC 11-21, for corresponding communication when the BWP 11 and the BWP 21 are activated. The terminal may allocate a DC location, namely, a DC 11-22, for corresponding communication when the BWP 11 and the BWP 22 are activated. The terminal may allocate a DC location, namely, a DC 11-23, for corresponding communication when the BWP 11 and the BWP 23 are activated.

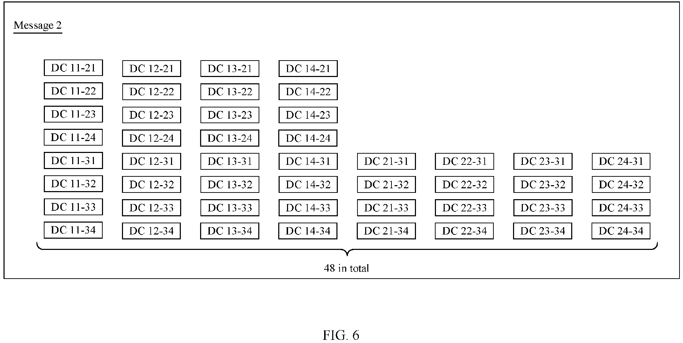

Similarly, the terminal may further allocate corresponding DC locations for other combinations, each of which includes two BWPs that may be simultaneously activated. In this way, as shown in FIG. 6, the terminal may allocate a total of $C_{12}^2 - 3 \times C_4^2 = 66 - 3 \times 6 = 48$ DC locations for communication corresponding to all combinations, each of which includes two BWPs that may be simultaneously activated. The terminal may add the 48 DC locations to the message 3, and send the message 3 to the network device.

It should be understood that in different network environments, the terminal may determine, based on different protocol rules, possible corresponding scenarios when two BWPs are simultaneously activated, and configure corresponding DC locations for different scenarios. Therefore, in addition to the foregoing two cases shown in FIG. 5 and FIG. 6, the terminal can further flexibly adjust a quantity of DC locations of communication that may be allocated, based on a case in which BWPs are simultaneously activated, as specified in the corresponding protocol in the network environment corresponding to the communication. Details are not described in this embodiment of this application. In some implementations of this embodiment of this application, the message 3 may be an RRC message. For example, the message 3 may be an RRCReconfigurationComplete message or an RRCResumeComplete message. In the message 3, the terminal may simultaneously report cell identities corresponding to different DC locations of communication, so that the network device can learn a specific cell in which a DC location corresponding to communication is located. Correspondingly, the terminal may report, based on carrier frequency bands of cells in a grouping manner on a cell basis, frequencies corresponding to different DC locations of communication. In an example, the following shows a schematic structure of a message 3 provided in this embodiment of this application. For example, the terminal allocates two DC locations (for example, the DC 11-21 and the DC 11-22) for communication corresponding to combinations, each of which includes two BWPs that may be activated (for example, when the BWP 11 in the cell 1 and the BWP 21 in the cell 2 are simultaneously activated, a BWP 11-21 is recorded; and when the BWP 11 in the cell 1 and the BWP 22 in the cell 2 are simultaneously activated, a BWP 11-22 is recorded), where a frequency corresponding to the DC 11-21 falls within the cell 1, and a frequency corresponding to DC 11-22 falls within the cell 2:

```
cell 1+cell 2{
BWP11-21
{ cellID: {1}
Location: (DC11-21)
}
BWP11-22
{ cellID: {2}
Location: (DC11-22)
}
}
```

It can be learned that by using the message 3, the network device can learn that in a frequency band range corresponding to the cell 1, a DC location that is included in the terminal and that is of communication corresponding to two simultaneously activated BWPs whose identifier is the BWP 11-21 (namely, the BWP 11 in the cell 1 and the BWP 21 in the cell 2) is the DC 11-21. In addition, the network device can also learn that in a frequency band range corresponding to the cell 2, a DC location that is included in the terminal and that is of communication corresponding to two simultaneously activated BWPs whose identifier is the BWP 11-22 (namely, the BWP 11 in the cell 1 and the BWP 22 in the cell 2) is the DC 11-22. It can be understood that in a possible implementation, the DC locations may be identified by using corresponding 0 to 3301.

It should be noted that in this embodiment of this application, the message 3 may be proactively reported by the terminal after configuring DC locations of communication corresponding to combinations, each of which includes two BWPs that may be activated, or may be reported according to an instruction of the network device. In an example, the network device may send a message 4 to the terminal, where the message 4 may indicate the terminal to report the DC locations of communication corresponding to the combinations, each of which includes two BWPs that may be activated in the M BWPs configured for the terminal.

For example, the message 4 may also be an RRC message. For example, the message 4 may be a CellGroupConfig message. In some implementations, a reportUplinkTxdirectCurrent identifier included in the CellGroup-Config message may indicate whether the terminal needs to report content corresponding to the message 3. For example, when the reportUplinkTxdirectCurrent identifier is set to a first value, the terminal may report, based on the message 4, the content corresponding to the message 3. When the reportUplinkTxdirectCurrent identifier is set to a second value, the terminal does not need to report the content corresponding to the message 3.

Certainly, the foregoing descriptions of the message 3 and the message 4 are merely examples. In this embodiment of this application, corresponding functions of the message 3 and/or the message 4 may be alternatively implemented by using another RRC message or a non-RRC message. For example, the reportUplinkTxdirectCurrent identifier included in the existing CellGroupConfig message indicates the UE to report a DC location corresponding to each BWP in each cell. In contrast, a new identifier (which is referred to as, for example, reportUplinkTxdirectCurrent-multiBWP) may be set to indicate the UE to report the content corresponding to the message 3. This is not limited in this embodiment of this application.

In an example, the network device may send the message 4 in the following interaction manner.

A CA combination that needs DC location reporting performed in a CC pair manner may be located in a master cell group MCG, or may be located in a secondary cell group SCG. The network device may indicate, by attaching the message 4 to different cell groups, that the UE needs to perform CA uplink direct current location reporting in a cell group. A specific implementation may be described as follows:

1> set content of an RRC reconfiguration complete (RRCReconfigurationComplete) message as follows:

2> if RRCReconfiguration includes a master cell group (masterCellGroup, MCG) of an uplink transmission direct current CA report (reportUplinkTxDirectCurrentCA),
3> a CC pair corresponding to each MCG configured in intra-band contiguous uplink CA includes an uplink transmission direct current CA list (uplinkTxDirectCurrentListCA); or
2> if RRCReconfiguration includes a secondary cell group (secondary CellGroup, SCG) of the uplink transmission direct current CA report (reportUplinkTxDirectCurrentCA),
3> a CC pair corresponding to each SCG configured in the intra-band contiguous uplink CA includes an uplink transmission direct current CA list (uplinkTxDirectCurrentListCA).

The foregoing content can be represented as follows in a protocol structure:

1> set the content of the RRCReconfigurationComplete message as follows:

2> if the RRCReconfiguration includes the masterCellGroup containing the reportUplinkTxDirectCurrentCA:
3> include the uplinkTxDirectCurrentListCA for each MCG serving cells pairs configured within intra-band contiguous UL CA;
2> if the RRCReconfiguration includes the secondary Cell Group containing the reportUplinkTxDirectCurrentCA:
3> include the uplink TxDirectCurrentListCA for each SCG serving cells pairs configured within intra-band contiguous UL CA;

In the foregoing implementation, the network device may configure a second message for the terminal device by using an RRC configuration message, and then the UE sends the first message to the base station, to indicate the DC locations corresponding to the CA.

Correspondingly, the terminal device may report the first message to the network device in the RRC reconfiguration complete message.

In an example, a structure in the RRCReconfigurationComplete message may include:

RRC reconfiguration complete-v16xy-elements ::=  SEQUENCE {

uplink transmission direct current CA list-r16  uplink  transmission direct current CA list-r16

Optionally,

no critical extension  sequence {}

Optionally,

}

that is:

RRCReconfigurationComplete-v16xy-IEs ::=  SEQUENCE {

uplinkTxDirectCurrentListCA-r16  UplinkTxDirectCurrentListCA-r16 OPTIONAL,

nonCriticalExtension  SEQUENCE {} OPTIONAL

}

In some implementations of this application, related content may be further added to a cell group configuration information element (CellGroupConfig information element) and corresponding cell group configuration field descriptions (CellGroupConfig field descriptions), so that the second message may be delivered to the terminal by using the RRC configuration message, and the second message may include a DC location indication corresponding to the CA. In other words, sending of the first message is enabled by using the second message. In this example, the message 3 is corresponding to the first message in the foregoing description, and the message 4 is corresponding to the second message in the foregoing description.

The cell group configuration information element may include:

uplink transmission direct current location CA report-r16  enumerated {true]

Optional  --a condition is BWP reconfiguration

reportUplinkTxDirectCurrentCA-r16  ENUMERATED {true} OPTIONAL  --  Cond BWP-Reconfig.

The cell group configuration field descriptions may include following descriptions:

uplink transmission direct current location CA report
allows reporting of direct current location information for uplink intra-band CA upon BWP configuration and reconfiguration. This field is absent from IE CellGroupConfig when provided as part of an RRCSetup message.
reportUplinkTxDirectCurrentCA

Enables reporting of uplink Direct Current location information for uplink intra-band CA upon BWP configuration and reconfiguration. This field is absent in the IE CellGroupConfig when provided as part of RRCSetup message.

In addition, it should be noted that in the foregoing example, the message 3 includes the DC locations configured by the terminal for the communication corresponding to the combinations, each of which includes two BWPs that may be activated. In some other embodiments, the terminal may further configure the corresponding DC location for each BWP, for example, configure the DC 11 for the BWP 11 and configure the DC 21 for the BWP 21. In this example, the terminal may further add the DC location corresponding to each BWP to the message 3, and send the message 3 to the network device, so that the network device determines, based on the message 3, a DC location that is corresponding to communication when only one BWP is activated. In a possible implementation, when the network device needs the terminal to report the DC location corresponding to each BWP, the network device may send, to the terminal, the CellGroupConfig message including the reportUplinkTxdirectCurrent identifier that is set to a third value, so that the terminal may feed back the DC location corresponding to each BWP to the network device based on the received CellGroupConfig message. In some other implementations, the network device may send, to the terminal, the CellGroupConfig message including the reportUplinkTxdirectCurrent identifier that is set to a fourth value, so that the terminal feeds back, to the network device based on the received CellGroupConfig message, the DC location corresponding to each BWP and the DC locations configured for the communication corresponding to the combinations, each of which includes two BWPs that may be activated.

Based on the foregoing description, it can be understood that, after DC locations are separately configured for communication corresponding to different combinations, each of which includes two BWPs that may be simultaneously activated, the terminal may add all the configured DC locations to the message 3, and send the message 3 to the network device. In this way, the network device can learn the DC locations of the communication corresponding to all the combinations, each of which includes two BWPs that may be simultaneously activated.

S402: The network device receives the message 3.

S403: The network device determines the DC location of the current communication based on the message 3.

Based on the received message 3, the network device can learn a DC location that is corresponding to communication when any two BWPs are simultaneously activated. For example, if only two activated BWPs are included in one communication process, the network device may determine, from the message 3, a DC location corresponding to the two activated BWPs as the DC location of the current communication. For another example, if a plurality of activated BWPs are included in one communication process, the network device may also determine, from the message 3, a corresponding DC location as the DC location of the current communication based on a BWP corresponding to a highest frequency and a BWP corresponding to a lowest frequency in the plurality of activated BWPs.

For example, in some embodiments, the current communication is intra-band CA communication. A protocol corresponding to the intra-band CA communication specifies that only one BWP is activated at a time in one cell, and the network device configures three cells, for example, a cell 1, a cell 2, and a cell 3, for the terminal. Each cell includes four BWPs. For example, the cell 1 includes a BWP 11, a BWP 12, a BWP 13, and a BWP 14; the cell 2 includes a BWP 21, a BWP 22, a BWP 23, and a BWP 24; and the cell 3 includes a BWP 31, a BWP 32, a BWP 33, and a BWP 34. In this case, the message 3 received by the network device from the terminal may include the 48 DC locations shown in FIG. 6 and corresponding information about every two activated BWPs.

In some implementation scenarios, that the BWP 11 and the BWP 21 are simultaneously activated in the intra-band CA is used as an example. In this case, the network device may query the message 3 for a DC location (for example, a DC 11-21) corresponding to the BWP 11 and the BWP 21, and use the DC 11-21 as a DC location of the current intra-band CA.

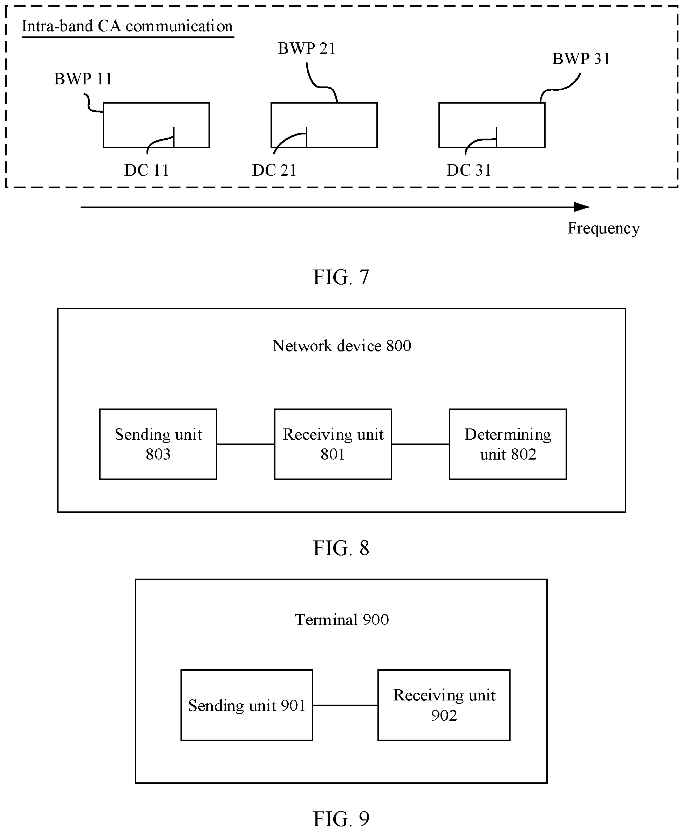

In some other implementation scenarios, that the BWP 11, the BWP 21, and the BWP 31 are simultaneously activated in the intra-band CA is used as an example. Because there is a case in which more than two BWPs are simultaneously activated, the network device may select two BWPs from the activated BWPs, and determine a DC location of the intra-band CA based on the two BWPs. For example, the network device may select two BWPs corresponding to a lowest frequency and a highest frequency in the activated BWPs, and use, as the DC location of the current communication, a corresponding DC location in the message 3 when the two BWPs are simultaneously activated. An example is used in which distribution of the activated BWP 11, BWP 21, and BWP 31 in frequency domain is distribution shown in FIG. 7. It can be learned that the BWP 11 is a BWP corresponding to a lowest frequency location in the activated BWPs, and the BWP 31 is a BWP corresponding to a highest frequency location in the activated BWPs. In this case, the network device may determine, as the DC location corresponding to the current intra-band CA, a corresponding DC location in the message 3 when the BWP 11 and the BWP 31 are simultaneously activated.

In this solution, the terminal may send, to the network device, the DC locations of the communication corresponding to all the combinations, each of which includes two BWPs that may be simultaneously activated, so that the network device can quickly determine the corresponding DC location based on the BWPs activated in the current communication, and perform communication optimization based on the DC location. In addition, by using this method, the method for determining a DC location that is corresponding to communication when a plurality of BWPs are activated is provided. This is conducive to accurately measuring related RF performance in this scenario.

It should be noted that in the foregoing description, an example is used for description in which the terminal determines a possible DC location based on combinations, each of which includes two BWPs that are in the BWPs configured by the network device for the terminal and that may be simultaneously activated, and reports the possible DC location to the network device. It can be understood that, when configuring the BWPs for the terminal, the network device may configure a plurality of component carriers (component carrier, CC) for the terminal, where each CC includes a plurality of BWPs. In this example, the solution in which the terminal determines combinations shown in this application may be alternatively implemented by using the following method, where each combination includes two BWPs that may be simultaneously activated.

For example, the network device configures A1 CCs for the terminal, where the CCs include a CC 1 configured with B1 BWPs and a CC 2 configured with B2 BWPs. The terminal may select any two CCs from the A1 CCs to form a CC pair (CC pair), and report, to the network device once, DC locations corresponding to all combinations, each of which includes two BWPs included in one CC pair. For example, when only one BWP can be activated at a time in each CC, a CC pair composed of the CC 1 and the CC 2 may include $C_{B1}^{1} \times C_{B2}^{1}$ possible combinations, each of which includes two BWPs. Therefore, when reporting DC locations corresponding to the CC pair composed of the CC 1 and the CC 2, the terminal may report, to the network device, DC locations respectively corresponding to the $C_{B1}^{1} \times C_{B2}^{1}$ possible combinations, each of which includes two BWPs.

It can be understood that, when a plurality of BWPs can be simultaneously activated in each CC, the CC pair composed of the CC 1 and the CC 2 may include $C_{B1+B2}^{2}$ possible combinations, each of which includes two BWPs. Therefore, when reporting DC locations corresponding to the CC pair composed of the CC 1 and the CC 2, the terminal may report, to the network device, DC locations respectively corresponding to the $C_{B1+B2}^{2}$ possible combinations, each of which includes two BWPs. The following uses an example in which one BWP can be activated at a time in each CC. For other CC pairs, the terminal may also report DC locations corresponding to the CC pairs with reference to the foregoing manners of reporting the information corresponding to the CC 1 and the CC 2. For example, generally, the network device configures A1 CCs (for example, CC 1, CC 2, ..., and CC A1) for the terminal, a quantity of CC pairs composed of any two of the A1 CCs is $C_{A1}^{2}$, k1 BWPs are configured in a CC 1 in a $k^{th}$ CC pair, and k2 BWPs are configured in a CC 2 in the $k^{th}$ CC pair. k to $C_{A1}^{2}$ are all positive integers, k1 and k2 are both positive integers, and any two numbers thereof may be identical or different. Then, a total quantity of DC locations reported by the terminal to the network device is $\sum_{k=1}^{C_{A1}^{2}} C_{k1}^{1} C_{k2}^{1}$. When it is considered that a maximum of four BWPs can be configured in each CC, a total upper limit quantity of the DC location reported by the terminal to the network device is $16 \times C_{A1}^{2}$. In a possible design, the first message may further include an indication flag bit. The indication flag bit indicates that the P DC locations are related to a downlink CC of the terminal, or indicates that the P DC locations are related to an uplink CC of the terminal. For example, a value 0 of the indication flag bit may indicate that the P DC locations are related to the downlink CC of the terminal, and a value 1 of the indication flag bit may indicate that the P DC locations are related to the uplink CC of the terminal. For another example, the indication flag bit may indicate that one or more of the P DC locations are related to a downlink CC of the terminal or related to an uplink CC of the terminal Specifically, if the first message indicates that the P DC locations are related to the downlink CC of the terminal, the P DC locations specifically include a DC location corresponding to any two BWPs in a CC pair composed of any two of A downlink CCs that are configured by the network device for the terminal, and the any two BWPs are respectively located in different CCs in the CC pair. A is an integer greater than 2. Further, the first message may indicate that the DC location of the current communication of the terminal is related to a configured downlink CC or related to an activated downlink CC. When the P DC locations are related to the downlink CC of the terminal, the terminal may report, in the manner in the foregoing example, DC locations corresponding to the A downlink CCs. Correspondingly, a cell identity in the first message may be specifically an identity of a cell in which the downlink CC is located.

If the first message indicates that the P DC locations are related to the uplink CC of the terminal, the P DC locations specifically include a DC location corresponding to any two BWPs in a CC pair composed of any two of A uplink CCs that are configured by the network device for the terminal, and the any two BWPs are respectively located in different CCs in the CC pair. Further, the first message may indicate that the DC location of the current communication of the terminal is related to a configured uplink CC or related to an activated uplink CC. When the P DC locations are related to the uplink CC of the terminal, the terminal may report, in the manner in the foregoing example, DC locations corresponding to the A uplink CCs. Correspondingly, a cell identity in the first message may be specifically an identity of a cell in which the uplink CC is located. Further, a downlink CC corresponding to each of the P DC locations and a status of the downlink CC may be separately indicated in the first message. For example, a configured downlink CC 1 and an activated downlink CC 2 are corresponding to M DC locations, and an activated downlink CC 1 and a configured downlink CC 2 are corresponding to N DC locations.

In a possible design, the P DC locations indicated in the first message may include: a DC location corresponding to any two configured BWPs in a CC pair composed of any two of a plurality of CCs that are activated by the network device for the terminal, where the any two BWPs are respectively located in different CCs in the CC pair; or DC locations corresponding to activated BWP combinations in the plurality of currently activated CCs. Specifically, when the P DC locations are related to the downlink CC of the terminal, the P DC locations indicated in the first message may include: a DC location corresponding to any two configured BWPs in a CC pair composed of any two of A downlink CCs that are currently activated for the terminal; or DC locations corresponding to activated BWP combinations in the plurality of currently activated downlink CCs. When the P DC locations are related to the uplink CC of the terminal, the P DC locations indicated in the first message may include: a DC location corresponding to any two configured BWPs in a CC pair composed of any two of A uplink CCs that are currently activated for the terminal; or DC locations corresponding to activated BWP combinations in the plurality of currently activated uplink CCs. Further, after receiving the foregoing information reported by the terminal, the network device may select, based on the currently activated CC pairs and the activated BWP combinations in the activated CC pairs, a DC location corresponding to a corresponding combination of two BWPs from possible combinations in different CC pairs reported by the terminal, where each combination includes two BWPs. In this way, the DC locations in the current communication process can be obtained. When the first message indicates that the P DC locations are related to the downlink CC of the terminal, the currently activated CC pairs and the activated BWP combinations in the activated CC pairs are specifically: currently activated downlink CC pairs and activated BWP combinations in the activated downlink CC pairs, where each combination includes two BWPs. When the first message indicates that the P DC locations are related to the uplink CC of the terminal, the currently activated CC pairs and the activated BWP combinations in the activated CC pairs are specifically: currently activated uplink CC pairs and activated BWP combinations in the activated uplink CC pairs, where each combination includes two BWPs.

Further, when determining a DC location of uplink transmission of the terminal, the network device may also obtain the DC location by using status information of each CC indicated in the first message and current status information of each current CC. For example, the first message indicates that a DC location corresponding to a BWP 11 in the configured downlink CC 1 and a BWP 21 in the activated downlink CC 2 is a DC 1, and the first message indicates that a DC location corresponding to a BWP 11 in the activated downlink CC 1 and a BWP 21 in the configured downlink CC 2 is a DC 2. In this case, the network device determines the DC location of the current communication based on current configuration or activation statuses of the CC 1 and the CC 2.

In addition, when the first message indicates that the P DC locations are related to the downlink CC of the terminal, if the DC location that is of the current communication of the terminal and that is determined by the network device does not overlap a location of an uplink resource of the terminal, or at least one DC location that is in the P DC locations indicated by the first message and that is used to determine the DC location of the current communication cannot be determined or is outside the uplink resource, the network device may determine not to process the DC location of the current communication. In other words, the network device determines not to process a local oscillation leakage of the terminal. The uplink resource includes at least one of the following: a configured uplink CC, a configured BWP in the configured uplink CC, an activated BWP in the configured uplink CC, a configured BWP in an activated uplink CC, and an activated BWP in the activated uplink CC.

In a possible design, the first message may be reported by using a media access control control element (media access control control element, MAC CE). Information about the MAC CE entity may be reported after an event is triggered. Events that trigger reporting may include: cell activation, cell deactivation, BWP switching, cell switching, a channel bandwidth change, and a discontinuous reception (discontinuous reception, DRX) state change. The DC location reported by the terminal may be a real-time DC location of current communication, or may be the P DC locations obtained through updating after the event occurs. Further, the information about the MAC CE entity may be used to periodically report the first message. When a timing condition is satisfied, the terminal reports the first message to the network device by adding the first message in latest uplink transmission. In addition, the second message may also provide an indication for the terminal device by using the MAC CE entity, and require the terminal device to report the DC location. The second message may be indicated by using a cell activation, cell deactivation, or BWP switching MAC CE.

In a possible design, the first message may be used to report the DC location by using a physical control channel or a physical data channel. The physical control channel may be a physical uplink control channel (physical uplink control channel, PUCCH), and the data channel may be a physical uplink shared channel (physical uplink shared channel, PUSCH). Correspondingly, reporting of the DC location in the PUCCH or the PUSCH is notified by the network device by using downlink control information (downlink control information, DCI). In other words, the second message may be carried in the downlink control information, for example, BWP switching DCI, DCI used for uplink data transmission scheduling, or DCI for triggering SRS switching.

In a possible design, the information indicating whether the DC location is related to the downlink CC may be alternatively reported by using terminal device capability information, namely, UEcapabilityinformation. For example, the information is carried in BandCombinationList.

In another possible design, a specific frequency domain location of the DC location in the first message may be alternatively reported by using absolute radio frequency channel number (absolute radio frequency channel number, ARFCN) information, or a specific frequency of the DC location may be reported by using two pieces of information: an agreed reference point, for example, PointA, and a frequency domain offset of the agreed reference point.

It should be understood that in an existing communication solution, the terminal may send DC locations corresponding to included possible activated BWPs to a cell on which the DC locations are currently camped (for example, a primary cell (primary cell, PCell)) for processing. Therefore, in some other implementations of this application, the terminal may further compress, based on the Pcell, a data volume of possible DC locations sent to the network device. In the following description, a CC corresponding to the Pcell may be referred to as a CCp.

In this example, the terminal may report, to the network device, DC locations corresponding to possible combinations included in the CC pair that is composed of the CC 1 and the CC 2 and whose carrier frequency satisfies the following condition, where each combination includes two BWPs:

$$f_{CC_1} \leq f_{CC_P} \leq f_{CC_2},$$

where $f_{CC_1}$ is a carrier frequency of the CC 1, $f_{CC_2}$ is a carrier frequency of the CC 2, and $f_{CC_P}$ is a carrier frequency of the CC$_P$. The CC 1, the CC 2, and the CC$_P$ are all included in the plurality of CCs configured by the network device for the terminal.

It can be understood that in the plurality of CCs configured by the network device for the terminal, based on an ascending/descending order of carrier frequencies corresponding to the CCs, there may be two cases for a location of the CCp. Case 1: The carrier frequency corresponding to the CCp is a highest or lowest carrier frequency in the carrier frequencies of the plurality of CCs. Case 2: In the carrier frequencies of the plurality of CCs, there is a carrier frequency greater than the carrier frequency corresponding to the CCp, and there is also a carrier frequency less than the carrier frequency corresponding to the CCp. In this example, the foregoing two cases may be handled differently.

In the case 1, the carrier frequency corresponding to the CCp is a highest or lowest carrier frequency in the carrier frequencies of the plurality of CCs, that is, $f_{CC_1} = f_{CCP} < f_{CC_2}$, or $f_{CC_1} < f_{CCP} = f_{CC_2}$. In other words, according to the method provided in the foregoing solution in this embodiment of this application, when a BWP with a highest carrier frequency and a BWP with a lowest carrier frequency are selected from the BWPs in all the activated CCs, there is one BWP (for example, the BWP with the carrier frequency or the BWP with the carrier frequency) that is a BWP in the CCp. Therefore, when selecting a CC pair, the terminal may fixedly select one CC in the CC pair as the CCp. That the network device configures A1 CCs for the terminal and each CC includes A2 BWPs is still used as an example. In the case 1, the terminal may determine CC pairs including the CCp, and a quantity of such CC pairs is (A1-1) at most. Obviously, a value of (A1-1) is significantly less than $C_{A1}^{\prime 2}$. Therefore, a quantity of DC locations of BWP combinations corresponding to the CC pairs reported by the terminal to the network device is significantly reduced. In this way, pressure of data communication between the terminal and the network device can be reduced, and the network device can determine the current DC location from the DC locations more quickly.

Case 2: In the carrier frequencies of the plurality of CCs, there is a carrier frequency greater than the carrier frequency corresponding to the CCp, and there is also a carrier frequency less than the carrier frequency corresponding to the CCp, that is, $f_{CC_1} < f_{CCP} < f_{CC_2}$. In other words, in the plurality of CCs configured by the network device for the terminal, the carrier frequency of the CCp is located at a middle location. It can be understood that in the case 2, a BWP corresponding to the CCp may not be the BWP with the highest carrier frequency or the BWP with the lowest carrier frequency in all the currently activated BWPs. Therefore, more DC locations corresponding to combinations corresponding to CC pairs need to be reported, where each combination includes two BWPs. In this example, the terminal device may use a CC pair in all possible CC pairs that is composed of two CCs whose carrier frequencies form a frequency range including the carrier frequency of the CCp, as a CC pair that needs to be reported. For example, the network device configures four CCs for the terminal, where the four CCs are a CC 1, a CC 2, a CC 3, and a CC 4 according to an ascending order of carrier frequencies, and the CCp is the CC 2. The terminal may form a CC pair by using the CC 1 and the CC 2, form a CC pair by using the CC 1 and the CC 3, and form a CC pair by using the CC 1 and the CC 4. The terminal may further form a CC pair by using the CC 2 and the CC 3, and form a CC pair by using the CC 2 and the CC 4. Because a range of a carrier frequency corresponding to a CC pair composed of the CC 3 and the CC 4 does not include a carrier frequency corresponding to the CC 2, the terminal does not need to report DC locations of combinations corresponding to the CC pair composed of the CC 3 and the CC 4, where each combination includes two BWPs. It can be learned that in case the 2, by using the solution in the foregoing example, DC locations of combinations corresponding to the CC pair reported by the terminal are also compressed (for example, the possible DC locations corresponding to the CC pair composed of the CC 3 and the CC 4 are not reported), where each combination includes two BWPs. In this way, pressure of communication between the terminal and the network device can be reduced, and the network device can find the current DC location more quickly.

Based on the foregoing description, this embodiment of this application further provides a specific implementation example of a mechanism in which the terminal performs reporting for the network device on a CC basis.

In this example, the terminal may report a CC pair composed of any two of N CCs that are configured by the network device for the terminal. For example, the reported CC pair may be identified as SEQUENCE (SIZE (1..maxNrofCellPairs)). In other words, the terminal may report cellIDs of two CCs for each CC pair. In addition, the terminal may further report, for each CC pair, all BWP pairs that may be simultaneously activated. For example, the reported BWP pairs may be identified as SEQUENCE (SIZE (1..maxNrofBWPsPairs)). In some implementations, in information about the BWP pairs reported by the terminal, each BWP pair may include two information elements, for example, a DC location that identifies a location of an RE. The solution may be implemented by using the following identifier: txDirectCurrentLocation-r16 INTEGER (0..3301). A cell in which the DC location is located is servCellIndex-r16 ServCellIndex.

The following provides a specific protocol structure corresponding to the foregoing example and a possible implementation of a corresponding description.

The uplink transmission direct current CA list element indicates a transmission direct current DC location of each serving cell pair with intra-band uplink contiguous CA based on a BWP subcarrier spacing parameter (numerology) and associated carrier bandwidth.

The IE UplinkTxDirectCurrentListCA indicates the Tx Direct Current locations per serving cell pair for intra-band UL contiguous CA, based on the BWP numerology and the associated carrier bandwidth.

The structure may include a plurality of CC pairs, that is, SEQUENCE (SIZE (1..maxNrofCellPairs)). A reporting manner of each CC pair is reporting cellIDs of two CCs. All BWP pairs that may be simultaneously activated, namely, SEQUENCE (SIZE (1..maxNrofBWPsPairs)), are reported for each CC pair. Each BWP pair includes two information elements: a DC location that identifies a location of an RE, and a cell in which the DC location is located. The following provides an example of the structure:

```
"uplink transmission direct current DC list information element

-- access stack node 1 starts

-- tag-uplink transmission direct current DC list-start

uplink transmission direct current DC list-r16 ::=          sequence (size (1..maximum cell pair)
of uplink transmission direct current cell pair-r16

uplink transmission direct current cell pair-r16 ::=          sequence {
servCellIndex1-r16                                          ServCellIndex,
servCellIndex2-r16                                          ServCellIndex,
   uplink direct current BWP pair list-r16                 sequence  (size  (1..maximum  cell
pair) of uplink transmission direct current BWP pair-r16
      ...
```

```
                    }

uplink transmission direct current BWP pair-r16 ::=              sequence {

        servCellIndex-r16                                               ServCellIndex,

        shift7dot5kHz-r16                                               BOOLEAN,

        transmission direct current location-r16              integer (0..3301)

    }

    -- tag-uplink transmission direct current DC list-end

    -- access stack node 1 ends"
```

The foregoing structure may also be represented as follows:

```
    "UplinkTxDirectCurrentListCA information element

    -- ASN1START

    -- TAG-UPLINKTXDIRECTCURRENTLISTCA-START

    UplinkTxDirectCurrentListCA-r16 ::=              SEQUENCE              (SIZE

(1..maxNrofCellPairs)) OF UplinkTxDirectCurrentCellPair-r16

    UplinkTxDirectCurrentCellPair-r16 ::=              SEQUENCE {

    DLcarrierRelevant                                  BOOLEAN

    servCellIndex1-r16                                 ServCellIndex,

    servCellIndex2-r16                                 ServCellIndex,

        uplinkDirectCurrentBWPPairList-r16                     SEQUENCE          (SIZE

(1..maxNrofBWPsPairs)) OF UplinkTxDirectCurrentBWPPair-r16,

        ...

    }

    UplinkTxDirectCurrentBWPPair-r16 ::=              SEQUENCE {

        servCellIndex-r16                              ServCellIndex,

        shift7dot5kHz-r16                              BOOLEAN,

        txDirectCurrentLocation-r16                    INTEGER (0..3301)

    }

    -- TAG-UPLINKTXDIRECTCURRENTLISTCA-STOP

    -- ASN1STOP"
```

In this structure, DLcarrierRelevant indicates whether DC locations corresponding to all possible BWP combinations in one CC pair are related to a downlink CC. For example, if DLcarrierRelevant is set to 1, servCellIndex needs to be reported based on a cell identity corresponding to the downlink CC.

Uplink transmission direct current BWP pair field descriptions (UplinkTxDirectCurrentBWPPair field descriptions) corresponding to the foregoing structure may include content described in the following Table 1:

Table 1

| |
|---|
| Serving cell CellIndex<br>indicating a cell in which an uplink transmission direct current location is located |
| |
| Shift 7.5 kHz<br>indicating whether there is a shift of 7.5 kHz or not |
| Direct current DC location<br>The uplink transmission DC location for a BWP pair is indicated. A value of this field ranges from 0 to 3299. A sum of values of corresponding uplink BWP subcarrier spacing parameters numerologies that are corresponding to subcarrier indexes within a carrier is 3300, which indicates "outside the carrier". A value 3301 indicates "an undetermined location within the carrier". The descriptions can be applied to the current version of this specification. |

The foregoing content is basically consistent with content described in Table 2:

**Table 2**

| |
|---|
| servingCellIndex<br>Indicates serving cell where the uplink Tx Direct Current location locates. |
| |
| shift7dot5kHz<br>Indicates whether there is 7.5 kHz shift or not. |
| txDirectCurrentLocation<br>The uplink Tx Direct Current location for the BWP pair. Only values in the value range of this field between 0 and 3299, which indicate the subcarrier index within the carrier corresponding to the numerology of the corresponding uplink BWP and value 3300, which indicates "Outside the carrier" and value 3301, which indicates "Undetermined position within the carrier" are used in this version of the specification. |

In this example, uplink transmission direct current cell pair field descriptions (UplinkTxDirectCurrentCellPair field descriptions) may include content described in Table 3:

**Table 3**

| |
|---|
| |
| Uplink BWP direct current location<br>Indicating transmission direct current location corresponding to uplink BWPs configured in all cells for communication |
| Uplink transmission direct current BWP pair<br>Transmission direct current locations for all uplink BWP pairs are indicated. By iterating BWPs configured for a cell indicated by servCellIndex1 and iterating BWPs configured for a cell indicated by servCellIndex2, the UE needs to list all BWP pairs configured across CCs, for example, in the following sequence:<br>- a first entry is corresponding to a first BWP of the cell indicated by servCellIndex1 and a first BWP of the cell indicated by servCellIndex2;<br>- a second entry is corresponding to a second BWP of the cell indicated by servCellIndex1 and a first BWP of the cell indicated by servCellIndex2.<br>- the rest may be deduced by analogy. |

The foregoing content is basically consistent with content described in Table 4:

**Table 4**

| |
|---|
| uplinkDirectCurrentBWP<br>The Tx Direct Current locations for all the uplink BWPs configured at the corresponding serving cell. |
| UplinkTxDirectCurrentBWPPair<br>The Tx Direct Current locations for all uplink BWP pairs. The UE shall list all configured BWP pairs across CCs by first iterating BWPs configured for the cell indicated by servCellIndex1 and then iterating BWPs configured for the cell indicated by servCellIndex2, i.e, in the order indicated below:<br>- The first entry corresponds to the first BWP for the cell indicated by servCellIndex1 and the first BWP for the cell indicated by servCellIndex2,<br>- The second entry corresponds to the second BWP for the cell indicated by servCellIndex1 and the first BWP for the cell indicated by servCellIndex2<br>- And so on |

In some implementations, definitions of a maximum quantity of BWP pairs and/or a maximum quantity of CC pairs acceptable to a system may be included in multiplicity and type constraint definitions (Multiplicity and type constraint definitions).

For example, the maximum quantity of BWP pairs may be defined as follows:

maximum quantity of BWP pairs                integer ::= 16        --    maximum

quantity of BWP pairs in each serving CC pair

maxNrofBWPsPairs                INTEGER ::= 16        -- Maximum number

of BWPs pairs per serving cell pair

In this example, the maximum quantity of BWP pairs that can be included in each CC pair is 16. Certainly, this is merely an example. In some other implementations, the maximum quantity may be alternatively another value. For example, when each CC includes five BWPs, the maximum quantity may be 5×5=25. For another example, when each CC includes eight BWPs, the maximum quantity of BWP pairs may be 8×8=64.

For another example, the maximum quantity of CC pairs may be defined as follows:

maximum quantity of CC pairs                Integer :: = 256        --  maximum  quantity

of CC pairs in intra-band uplink CA

maxNrofCellPairs                INTEGER ::= 256        --  Maximum  number  cell

pairs for intra-band UL CA

In this example, the maximum quantity of CC pairs that can be included in each CC pair is 256. Certainly, this is merely an example. In some other implementations, the maximum quantity may be alternatively another value.

The following provides a specific protocol structure corresponding to the foregoing example and another possible implementation of a corresponding description:

```
UplinkTxDirectCurrentTwoCarrierList-r16 ::=                    SEQUENCE        (SIZE
(1..maxNrofTxDC-TwoCarrier-r16)) OF UplinkTxDirectCurrentTwoCarrier-r16

UplinkTxDirectCurrentTwoCarrier-r16 ::=                        SEQUENCE {

    DLcarrierRelevant                          BOOLEAN

      carrierOneInfo-r16                       UplinkTxDirectCurrentCarrierInfo-r16,

    carrierTwoInfo-r16                         UplinkTxDirectCurrentCarrierInfo-r16,

    singlePA-TxDirectCurrent-r16          UplinkTxDirectCurrentTwoCarrierInfo-r16,

    secondPA-TxDirectCurrent-r16          UplinkTxDirectCurrentTwoCarrierInfo-r16

OPTIONAL

}

UplinkTxDirectCurrentCarrierInfo-r16 ::=                       SEQUENCE {

    servCellIndex-r16                          ServCellIndex,

    servCellInfo-r16                           CHOICE {

        bwp-Id-r16                                 BWP-Id,

        deactivatedCarrier-r16                     ENUMERATED {deactivated}

    }

}

UplinkTxDirectCurrentTwoCarrierInfo-r16 ::=                    SEQUENCE {

    referenceCarrierIndex-r16              ServCellIndex,

    shift7dot5kHz-r16                          BOOLEAN,

    txDirectCurrentLocation-r16                INTEGER (0..3301)

}
```

The following provides a specific protocol structure corresponding to the foregoing example and another possible implementation of a corresponding description:

```
UplinkTxDirectCurrentTwoCarrierList-r16 ::=                    SEQUENCE         (SIZE

(1..maxNrofTxDC-TwoCarrier-r16)) OF UplinkTxDirectCurrentTwoCarrier-r16

    UplinkTxDirectCurrentTwoCarrier-r16 ::=                    SEQUENCE {

        carrierOneInfo-r16                        UplinkTxDirectCurrentCarrierInfo-r16,

        carrierTwoInfo-r16                        UplinkTxDirectCurrentCarrierInfo-r16,

        singlePA-TxDirectCurrent-r16          UplinkTxDirectCurrentTwoCarrierInfo-r16,

        secondPA-TxDirectCurrent-r16          UplinkTxDirectCurrentTwoCarrierInfo-r16

    OPTIONAL

    }

    UplinkTxDirectCurrentCarrierInfo-r16 ::=                    SEQUENCE {

        servCellIndex-r16                         ServCellIndex,

        servCellInfo-r16                          CHOICE {

            bwp-Id-r16                            BWP-Id,

            deactivatedCarrier-r16                ENUMERATED {deactivated}

            DLcarrier                             BOOLEAN

        }

    }

    UplinkTxDirectCurrentTwoCarrierInfo-r16 ::=                 SEQUENCE {

        referenceCarrierIndex-r16                 ServCellIndex,

        shift7dot5kHz-r16                         BOOLEAN,

        txDirectCurrentLocation-r16               INTEGER (0..3301)
```

Reporting of a specific frequency location of a DC location may be alternatively indicated by using an ARFCN. Details are as follows:

```
    UplinkTxDirectCurrentTwoCarrierInfo-r16 ::=                 ARFCN-ValueNR
```

A specific frequency location may be alternatively indicated by using a reference location and an offset from the reference location. Details are as follows:

```
    UplinkTxDirectCurrentTwoCarrierInfo-r16 ::=                 SEQUENCE {

    AbsoluteFrequencyPointA                                     ARFCN-ValueNR,

    OffsetToPointA                                              INTEGER (0..2199),

    }
```

The foregoing mainly describes the solutions provided in embodiments of this application from a perspective of interaction between devices. It can be understood that, to implement the foregoing functions, the terminal and the network device include corresponding hardware structures and/or software modules for performing the functions. A person skilled in the art should easily be aware that, in combination with units in the examples described in embodiments disclosed in this specification, this application can be implemented by hardware or a combination of hardware and computer software. Whether a function is performed by hardware or computer software driving hardware depends on particular applications and design constraints of the technical solutions. A person skilled in the art may use a different method to implement the described functions for each particular application, but it should not be considered that the implementation goes beyond the scope of this application.

In embodiments of this application, functional modules of the terminal and the network device may be obtained through division based on the foregoing method examples. For example, each functional module may be obtained through division in correspondence to each function, or two or more functions may be integrated into one processing module. The integrated module may be implemented in a form of hardware, or may be implemented in a form of a software functional module. Optionally, in embodiments of this application, module division is an example, is merely a logical function division, and may be other division during actual implementation.

For example, FIG. 8 is a schematic diagram of composition of a network device 800. The network device 800 may be configured to perform functions of the network device in the foregoing embodiments. In an implementation, as shown in FIG. 8, the network device 800 may include a receiving unit 801 and a determining unit 802.

The receiving unit 801 is configured to receive a first message, where the first message includes a DC location of each of M bandwidth parts BWPs that are configured by the network device for a terminal; and the determining unit 802 is configured to determine a DC location of current communication based on DC locations of N activated BWPs in the M BWPs, where M is an integer greater than or equal to 2, and N is an integer greater than or equal to 2 and less than M.

In a possible design, the determining unit 802 is configured to determine the DC location of the current communication based on a first frequency corresponding to a DC location of a first BWP and a second frequency corresponding to a DC location of a second BWP. A frequency corresponding to the DC location of the current communication is a center frequency of the first frequency and the second frequency. The first BWP is a BWP that is in the N BWPs and whose DC location is corresponding to a lowest frequency, and the second BWP is a BWP that is in the N BWPs and whose DC location is corresponding to a highest frequency.

In a possible design, a center frequency of frequencies corresponding to DC locations of any two of the M BWPs is a frequency corresponding to a resource element RE location.

In a possible design, the network device 800 may further include a sending unit 803. The sending unit 803 is configured to send a second message. The second message indicates the terminal to report the DC location of each of the M BWPs that are configured by the network device for the terminal.

It should be noted that all related content of steps in the foregoing method embodiments may be cited in function descriptions of corresponding functional modules. Details are not described herein again. The network device 800 provided in this embodiment of this application is configured to perform functions of the network device in the foregoing message processing method, and therefore can achieve an effect the same as that of the foregoing message processing method. Optionally but not necessarily, it can be understood that, when necessary, the network device 800 provided in this embodiment of this application may include a processing module or a control module configured to support the receiving unit 801, and/or the determining unit 802, and/or the sending unit 803 in implementing corresponding functions.

FIG. 9 is a schematic diagram of composition of a terminal 900 according to an embodiment of this application. As shown in FIG. 9, the terminal 900 may include a sending unit 901.

The sending unit 901 is configured to send a reporting message, where the reporting message includes a DC location of each of M bandwidth parts BWPs that are configured by a network device for the terminal, a center frequency of frequencies corresponding to DC locations of any two of the M BWPs is a frequency corresponding to a resource element RE location, and M is an integer greater than or equal to 2.

In a possible design, the terminal further includes a receiving unit 902. The receiving unit 902 is configured to receive a reporting indication message from the network device. The reporting indication message indicates the terminal to report the DC location of each of the M BWPs that are configured by the network device for the terminal.

It should be noted that all related content of steps in the foregoing method embodiments may be cited in function descriptions of corresponding functional modules. Details are not described herein again. The terminal 900 provided in this embodiment of this application is configured to perform functions of the terminal in the foregoing message processing method, and therefore can achieve an effect the same as that of the foregoing message processing method. Optionally but not necessarily, it can be understood that, when necessary, the terminal 900 provided in this embodiment of this application may include a processing module or a control module configured to support the sending unit 901 and/or the receiving unit 902 in implementing corresponding functions.

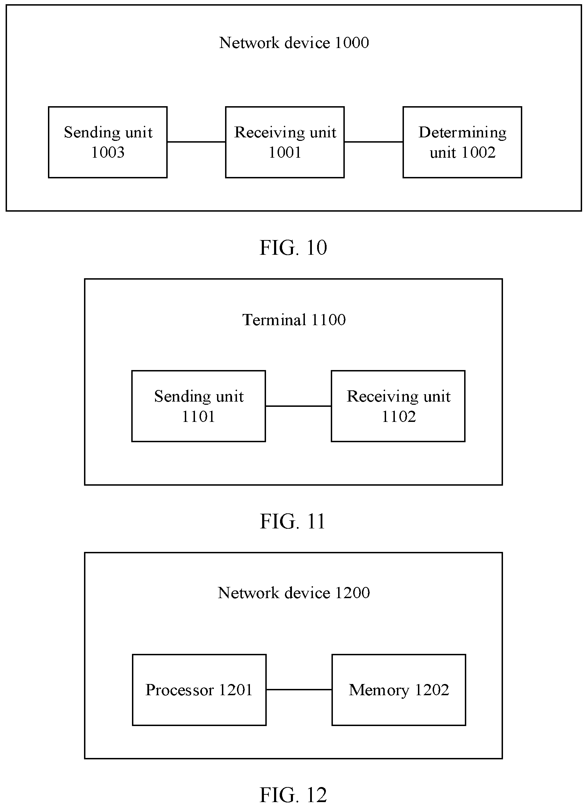

FIG. 10 is a schematic diagram of composition of a network device 1000 according to an embodiment of this application. As shown in FIG. 10, the network device 1000 includes a receiving unit 1001 and a determining unit 1002. The receiving unit 1001 is configured to receive a first message, where the first message includes P DC locations, each of the P DC locations is a DC location corresponding to any two of M bandwidth parts BWPs that are configured by the network device for a terminal, P is an integer greater than or equal to 1, and M is an integer greater than or equal to 2; and the determining unit 1002 is configured to determine a DC location of current communication based on the first message.

In a possible design, P is an integer less than or equal to $C_M^2$ .

In a possible design, any one of the P DC locations is a resource element RE location.

In a possible design, the determining unit 1002 is configured to determine a DC location corresponding to a first BWP and a second BWP in N activated BWPs in the M BWPs as the DC location of the current communication, where the DC location corresponding to the first BWP and the second BWP is one of the P DC locations, the first BWP is a BWP with a lowest frequency location in the N BWPs, the second BWP is a BWP with a highest frequency location in the N BWPs, and N is an integer greater than or equal to 2 and less than M.

In a possible design, the first message further includes a cell identity indicating a cell cell in which each of the P DC locations is located.

In a possible design, the network device further includes a sending unit 1003. The sending unit 1003 is configured to send a second message, where the second message indicates the terminal to report the DC location corresponding to the any two of the M BWPs that are configured by the network device for the terminal.

It should be noted that all related content of steps in the foregoing method embodiments may be cited in function descriptions of corresponding functional modules. Details are not described herein again. The network device 1000 provided in this embodiment of this application is configured to perform functions of the network device in the foregoing message processing method, and therefore can achieve an effect the same as that of the foregoing message processing method. Optionally but not necessarily, it can be understood that, when necessary, the network device 1000 provided in this embodiment of this application may include a processing module or a control module configured to support the receiving unit 1001, and/or the determining unit 1002, and/or the sending unit 1003 in implementing corresponding functions.

FIG. 11 is a schematic diagram of composition of a terminal 1100 according to an embodiment of this application. As shown in FIG. 11, the terminal 1100 includes a sending unit 1101.

The sending unit 1101 is configured to send a first message, where the first message includes P DC locations, each of the P DC locations is a DC location corresponding to any two of M bandwidth parts BWPs that are configured by a network device for the terminal, P is an integer greater than or equal to 1, and M is an integer greater than or equal to 2.

In a possible design, P is an integer less than or equal to $C_M^2$ .

In a possible design, any one of the P DC locations is a resource element RE location.

In a possible design, the first message further includes a cell identity indicating a cell cell in which each of the P DC locations is located.

In a possible design, the terminal further includes a receiving unit 1102. The receiving unit 1102 is configured to receive a second message, where the second message indicates the terminal to report the DC location corresponding to the any two of the M BWPs that are configured by the network device for the terminal.

It should be noted that all related content of steps in the foregoing method embodiments may be cited in function descriptions of corresponding functional modules. Details are not described herein again. The terminal 1100 provided in this embodiment of this application is configured to perform functions of the terminal in the foregoing message processing method, and therefore can achieve an effect the same as that of the foregoing message processing method. Optionally but not necessarily, it can be understood that, when necessary, the terminal 1100 provided in this embodiment of this application may include a processing module or a control module configured to support the sending unit 1101 and/or the receiving unit 1102 in implementing corresponding functions.

FIG. 12 is a schematic diagram of composition of a network device 1200 according to an embodiment of this application. As shown in FIG. 12, the network device 1200 includes a processor 1201 and a memory 1202. The memory 1202 is configured to store computer executable instructions. It should be noted that the processor 1201 provided in this embodiment can be configured to implement functions of the sending unit 803, the receiving unit 801, and the determining unit 802 shown in FIG. 8. For example, in some embodiments, when the processor 1201 executes the instructions stored in the memory 1202, the network device 1200 is enabled to perform S202 and S203 shown in FIG. 2 and other operations that need to be performed by the network device.

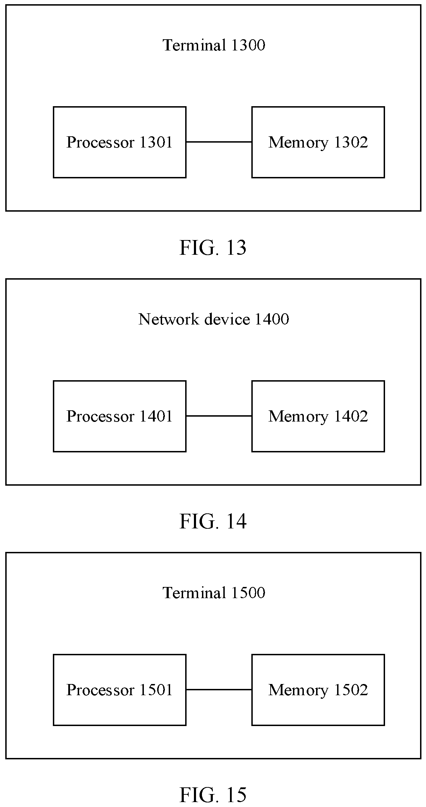

FIG. 13 is a schematic diagram of composition of a terminal 1300 according to an embodiment of this application. As shown in FIG. 13, the terminal 1300 may include a processor 1301 and a memory 1302. The memory 1302 is configured to store computer executable instructions. It should be noted that the processor 1301 provided in this embodiment can be configured to implement functions of the sending unit 901 and the receiving unit 902 shown in

FIG. 9. For example, in some embodiments, when the processor 1301 executes the instructions stored in the memory 1302, the terminal 1300 is enabled to perform S201 shown in FIG. 2 and other operations that need to be performed by the terminal.

FIG. 14 is a schematic diagram of composition of a network device 1400 according to an embodiment of this application. As shown in FIG. 14, the network device 1400 includes a processor 1401 and a memory 1402. The memory 1402 is configured to store computer executable instructions. It should be noted that the processor 1401 provided in this embodiment can be configured to implement functions of the sending unit 1003, the receiving unit 1001, and the determining unit 1002 shown in FIG. 10. For example, in some embodiments, when the processor 1401 executes the instructions stored in the memory 1402, the network device 1400 is enabled to perform S402 and S403 shown in FIG. 4 and other operations that need to be performed by the network device.

FIG. 15 is a schematic diagram of composition of a terminal 1500 according to an embodiment of this application. As shown in FIG. 15, the terminal 1500 may include a processor 1501 and a memory 1502. The memory 1502 is configured to store computer executable instructions. It should be noted that the processor 1501 provided in this embodiment can be configured to implement functions of the sending unit 1101 and the receiving unit 1102 shown in

FIG. 11. For example, in some embodiments, when the processor 1501 executes the instructions stored in the memory 1502, the terminal 1500 is enabled to perform S401 shown in FIG. 4 and other operations that need to be performed by the terminal.

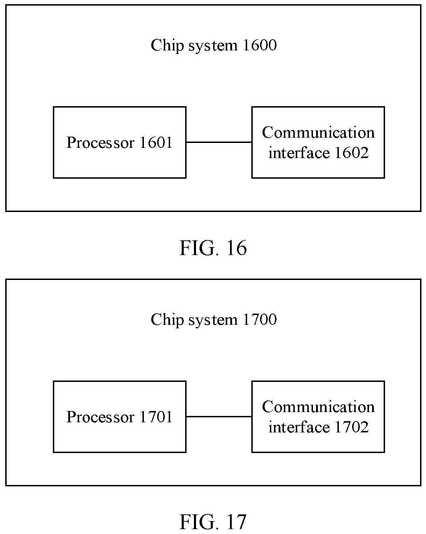

FIG. 16 is a schematic diagram of composition of a chip system 1600 according to an embodiment of this application. The chip system 1600 may be used in a network device. As shown in FIG. 16, the chip system 1600 may include a processor 1601 and a communication interface 1602, configured to support the network device in implementing functions related to the network device in the foregoing embodiments. For example, in some embodiments, the chip system 1600 may be configured to support the network device in performing S202 and S203 shown in FIG. 2 or performing S402 and S403 shown in FIG. 4. In a possible design, the chip system 1600 further includes a memory, configured to store program instructions and data that are necessary for the network device. The chip system may include a chip, or may include a chip and another discrete device.

FIG. 17 is a schematic diagram of composition of a chip system 1700 according to an embodiment of this application. The chip system 1700 may be used in a terminal. As shown in FIG. 17, the chip system 1700 may include a processor 1701 and a communication interface 1702, configured to support the terminal in implementing functions related to the terminal in the foregoing embodiments. For example, in some embodiments, the chip system 1700 may be configured to support the terminal in performing S201 shown in FIG. 2 or performing S401 shown in FIG. 4. In a possible design, the chip system 1700 further includes a memory, configured to store program instructions and data that are necessary for the terminal. The chip system may include a chip, or may include a chip and another discrete device.

An embodiment of this application further provides a communication system. The communication system includes one or more network devices and one or more terminals. The one or more network devices and the one or more terminals may be configured to implement any one of the message processing methods provided in the foregoing embodiments.

It should be noted that all related content of steps in the foregoing method embodiments may be cited in function descriptions of corresponding functional modules. Details are not described herein again. Each device (for example, a terminal and/or a network device) provided in embodiments of this application is configured to perform a function of a corresponding device in the foregoing embodiment, and therefore can achieve an effect the same as that of the foregoing message processing method. All or some of functions, actions, operations, steps, or the like in the foregoing embodiments may be implemented by using software, hardware, firmware, or any combination thereof. When a software program is used to implement the foregoing embodiments, all or some of the foregoing embodiments may be implemented in a form of a computer program product. The computer program product includes one or more computer instructions. When the computer program instructions are loaded and executed on a computer, all or some of the procedures or functions are generated according to embodiments of this application. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Further embodiments of the present invention are provided in the following. It should be noted that the numbering used in the following section does not necessarily need to comply with the numbering used in the previous sections.

Embodiment 1. A message processing method, wherein the method comprises:

receiving, by a network device, a first message, wherein the first message comprises a DC location of each of M bandwidth parts BWP that are configured by the network device for a terminal; and

determining, by the network device, a DC location of current communication based on DC locations of N activated BWPs in the M BWPs, wherein M is an integer greater than or equal to 2, and N is an integer greater than or equal to 2 and less than M.

Embodiment 2. The method according to embodiment 1, wherein the determining, by the network device, a DC location of current communication based on DC locations of N activated BWPs in the M BWPs comprises:

determining, by the network device, the DC location of the current communication based on a first frequency corresponding to a DC location of a first BWP and a second frequency corresponding to a DC location of a second BWP, wherein a frequency corresponding to the DC location of the current communication is a center frequency of the first frequency and the second frequency, the first BWP is a BWP that is in the N BWPs and whose DC location is corresponding to a lowest frequency, and the second BWP is a BWP that is in the N BWPs and whose DC location is corresponding to a highest frequency.

Embodiment 3. The method according to embodiment 1 or 2, wherein a center frequency of frequencies corresponding to DC locations of any two of the M BWPs is a frequency corresponding to a resource element RE location.

Embodiment 4. A message processing method, wherein the method comprises:

sending, by a terminal, a reporting message, wherein the reporting message comprises a DC location of each of M bandwidth parts BWP that are configured by a network device for the terminal, a center frequency of frequencies corresponding to DC locations of any two of the M BWPs is a frequency corresponding to a resource element RE location, and M is an integer greater than or equal to 2.

Embodiment 5. A message processing method, wherein the method comprises:

receiving, by a network device, a first message, wherein the first message comprises P DC locations, each of the P DC locations is a DC location corresponding to any two of M bandwidth parts BWP that are configured by the network device for a terminal, P is an integer greater than or equal to 1, and M is an integer greater than or equal to 2; and

determining, by the network device, a DC location of current communication based on the first message.

Embodiment 6. The method according to embodiment 5, wherein P is an integer less than or equal to $C_M^2$.

Embodiment 7. The method according to embodiment 5 or 6, wherein any one of the P DC locations is a resource element RE location.

Embodiment 8. The method according to any one of embodiments 5 to 7, wherein the determining, by the network device, a DC location of current communication based on the first message comprises:

determining, by the network device, a DC location corresponding to a first BWP and a second BWP in N activated BWPs in the M BWPs as the DC location of the current communication, wherein the DC location corresponding to the first BWP and the second BWP is one of the P DC locations, the first BWP is a BWP with a lowest frequency location in the N BWPs, the second BWP is a BWP with a highest frequency location in the N BWPs, and N is an integer greater than or equal to 2 and less than M.

Embodiment 9. The method according to any one of embodiments 5 to 8, wherein the first message further comprises a cell identity indicating a cell cell in which each of the P DC locations is located.

Embodiment 10. The method according to any one of embodiments 5 to 9, wherein the method further comprises:

sending, by the network device, a second message, wherein the second message indicates the terminal to report the DC location corresponding to the any two of the M BWPs that are configured by the network device for the terminal.

Embodiment 11. A message processing method, wherein the method comprises:

sending, by a terminal s a first message, wherein the first message comprises P DC locations, each of the P DC locations is a DC location corresponding to any two of M bandwidth parts BWP that are configured by a network device for the terminal, P is an integer greater than or equal to 1, and M is an integer greater than or equal to 2.

Embodiment 12. The method according to embodiment 11, wherein P is an integer less than or equal to $C_M^2$.

Embodiment 13. The method according to embodiment 11 or 12, wherein any one of the P DC locations is a resource element RE location.

Embodiment 14. The method according to any one of embodiments 11 to 13, wherein the first message further comprises a cell identity indicating a cell cell in which each of the P DC locations is located.

Embodiment 15. The method according to any one of embodiments 11 to 14, wherein the method further comprises:

receiving, by the terminal, a second message, wherein the second message indicates the terminal to report the DC location corresponding to the any two of the M BWPs that are configured by the network device for the terminal.
Embodiment 16. A message processing method, wherein the method comprises:

receiving, by a network device, a first message, wherein the first message indicates P direct current DC locations, each of the P DC locations is a DC location corresponding to any two bandwidth parts BWP in a CC pair pair composed of any two of A component carriers CC that are configured by the network device for a terminal, the any two BWPs are respectively located in different CCs in the CC pair, P is an integer greater than or equal to 1, and A is an integer greater than 2; and
determining, by the network device, a DC location of current communication based on the first message.

Embodiment 17. The method according to embodiment 16, wherein in at least two currently activated CCs, a first CC with a lowest carrier frequency and a second CC with a highest carrier frequency form a first CC pair, and in the first CC pair, a BWP currently in an activated state forms a first BWP combination; and
the determining, by the network device, a DC location of current communication based on the first message comprises:
obtaining, by the network devices, through query from the P DC locations, a DC location corresponding to the first BWP combination in the first CC pair as the DC location of the current communication.
Embodiment 18. The method according to embodiment 16 or 17, wherein the first message further indicates that the P DC locations are related to a downlink CC of the terminal; and
the P DC locations comprise a DC location corresponding to any two BWPs in a CC pair composed of any two of A downlink CCs that are configured by the network device for the terminal, and the any two BWPs are respectively located in different CCs in the CC pair.
Embodiment 19. The method according to embodiment 18, wherein the method further comprises:

if the DC location of the current communication does not overlap a location of an uplink resource of the terminal, or at least one DC location that is in the P DC locations indicated by the first message and that is used to determine the DC location of the current communication cannot be determined or is outside the uplink resource, determining, by the network device, not to process the DC location of the current communication; and
the uplink resource comprises at least one of the following: a configured uplink CC, a configured BWP in the configured uplink CC, an activated BWP in the configured uplink CC, a configured BWP in an activated uplink CC, and an activated BWP in the activated uplink CC.

Embodiment 20. The method according to embodiment 16 or 17, wherein the first message further indicates that the P DC locations are related to the uplink CC of the terminal; and
the P DC locations comprise a DC location corresponding to any two BWPs in a CC pair composed of any two of A uplink CCs that are configured by the network device for the terminal, and the any two BWPs are respectively located in different CCs in the CC pair.
Embodiment 21. The method according to embodiment 16 to 20, wherein any one of the P DC locations is a resource element RE location.
Embodiment 22. The method according to any one of embodiments 16 to 21, wherein the first message further comprises a cell identity indicating a cell cell in which each of the P DC locations is located.
Embodiment 23. The method according to any one of embodiments 16 to 22, wherein the method further comprises:
sending, by the network device, a second message, wherein the second message indicates the terminal to send the first message.
Embodiment 24. A message processing method, wherein the method comprises:
sending, by a terminal, a first message, wherein the first message indicates P direct current DC locations, each of the P DC locations is a DC location corresponding to any two bandwidth parts BWP in a CC pair pair composed of any two of A component carriers CC that are configured by a network device for the terminal, the any two BWPs are respectively located in different CCs in the CC pair, P is an integer greater than or equal to 1, and A is an integer greater than 2.
Embodiment 25. The method according to embodiment 24, wherein the first message further indicates that the P DC locations are related to a downlink CC of the terminal; and
the P DC locations comprise a DC location corresponding to any two BWPs in a CC pair composed of any two of A downlink CCs that are configured by the network device for the terminal, and the any two BWPs are respectively located in different CCs in the CC pair.
Embodiment 26. The method according to embodiment 25, wherein if at least one of the P DC locations does not overlap a location of an uplink resource of the terminal, the first message further indicates that the at least one DC location cannot be determined or is outside the uplink resource of the terminal; and
the uplink resource comprises at least one of the following: a configured uplink CC and a configured BWP in the configured uplink CC.

Embodiment 27. The method according to embodiment 24, wherein the first message further indicates that the P DC locations are related to the uplink CC of the terminal; and

the P DC locations comprise a DC location corresponding to any two BWPs in a CC pair composed of any two of A uplink CCs that are configured by the network device for the terminal, and the any two BWPs are respectively located in different CCs in the CC pair.

Embodiment 28. The method according to embodiment 24 to 27, wherein any one of the P DC locations is a resource element RE location.

Embodiment 29. The method according to any one of embodiments 24 to 28, wherein the first message further comprises a cell identity indicating a cell cell in which each of the P DC locations is located.

Embodiment 30. The method according to any one of embodiments 24 to 29, wherein the method further comprises: receiving, by the terminal, a second message, wherein the second message indicates the terminal to send the first message.

Embodiment 31. A network device, wherein the network device comprises a receiving unit and a determining unit;

the receiving unit is configured to receive a first message, wherein the first message comprises a DC location of each of M bandwidth parts BWP that are configured by the network device for a terminal; and

the determining unit is configured to determine a DC location of current communication based on DC locations of N activated BWPs in the M BWPs, wherein M is an integer greater than or equal to 2, and N is an integer greater than or equal to 2 and less than M.

Embodiment 32. The network device according to embodiment 31, wherein

the determining unit is configured to determine the DC location of the current communication based on a first frequency corresponding to a DC location of a first BWP and a second frequency corresponding to a DC location of a second BWP, wherein a frequency corresponding to the DC location of the current communication is a center frequency of the first frequency and the second frequency, the first BWP is a BWP that is in the N BWPs and whose DC location is corresponding to a lowest frequency, and the second BWP is a BWP that is in the N BWPs and whose DC location is corresponding to a highest frequency.

Embodiment 33. The network device according to embodiment 31 or 32, wherein a center frequency of frequencies corresponding to DC locations of any two of the M BWPs is a frequency corresponding to a resource element RE location.

Embodiment 34. A terminal, wherein the terminal comprises a sending unit; and

the sending unit is configured to send a reporting message, wherein the reporting message comprises a DC location of each of M bandwidth parts BWP that are configured by a network device for the terminal, a center frequency of frequencies corresponding to DC locations of any two of the M BWPs is a frequency corresponding to a resource element RE location, and M is an integer greater than or equal to 2

Embodiment 35. A network device, wherein the network device comprises a receiving unit and a determining unit;

the receiving unit is configured to receive a first message, wherein the first message comprises P DC locations, each of the P DC locations is a DC location corresponding to any two of M bandwidth parts BWP that are configured by the network device for a terminal, P is an integer greater than or equal to 1, and M is an integer greater than or equal to 2; and

the determining unit is configured to determine a DC location of current communication based on the first message.

Embodiment 36. The network device according to embodiment 35, wherein P is an integer less than or equal to $C_M^2$.

Embodiment 37. The network device according to embodiment 35 or 36, wherein any one of the P DC locations is a resource element RE location.

Embodiment 38. The network device according to any one of embodiments 35 to 37, wherein

the determining unit is configured to determine a DC location corresponding to a first BWP and a second BWP in N activated BWPs in the M BWPs as the DC location of the current communication, wherein the DC location corresponding to the first BWP and the second BWP is one of the P DC locations, the first BWP is a BWP with a lowest frequency location in the N BWPs, the second BWP is a BWP with a highest frequency location in the N BWPs, and N is an integer greater than or equal to 2 and less than M.

Embodiment 39. The network device according to any one of embodiments 35 to 38, wherein the first message further comprises a cell identity indicating a cell cell in which each of the P DC locations is located.

Embodiment 40. The network device according to any one of embodiments 35 to 39, wherein the network device further comprises a sending unit; and

the sending unit is configured to send a second message, wherein the second message indicates the terminal to report the DC location corresponding to the any two of the M BWPs that are configured by the network device for the terminal.

Embodiment 41. A terminal, wherein the terminal comprises a sending unit; and

the sending unit is configured to send a first message, wherein the first message comprises P DC locations, each of the P DC locations is a DC location corresponding to any two of M bandwidth parts BWPs that are configured by a network device for the terminal, P is an integer greater than or equal to 1, and M is an integer greater than or equal to 2.

Embodiment 42. The terminal according to embodiment 41, wherein P is an integer less than or equal to $C_M^2$ . .

Embodiment 43. The terminal according to embodiment 41 or 42, wherein any one of the P DC locations is a resource element RE location.

Embodiment 44. The terminal according to any one of embodiments 41 to 43, wherein the first message further comprises a cell identity indicating a cell cell in which each of the P DC locations is located.

Embodiment 45. The terminal according to any one of embodiments 41 to 44, wherein the terminal further comprises a receiving unit; and

the receiving unit is configured to receive a second message, wherein the second message indicates the terminal to report the DC location corresponding to the any two of the M BWPs that are configured by the network device for the terminal.

Embodiment 46. A network device, wherein the network device comprises a receiving unit and a determining unit;

the receiving unit is configured to receive a first message, wherein the first message indicates P direct current DC locations, each of the P DC locations is a DC location corresponding to any two bandwidth parts BWP in a CC pair pair composed of any two of A component carriers CC that are configured by the network device for a terminal, the any two BWPs are respectively located in different CCs in the CC pair, P is an integer greater than or equal to 1, and A is an integer greater than 2; and

the determining unit is configured to determine a DC location of current communication based on the first message.

Embodiment 47. The network device according to embodiment 46, wherein in at least two currently activated CCs, a first CC with a lowest carrier frequency and a second CC with a highest carrier frequency form a first CC pair, and in the first CC pair, a BWP currently in an activated state forms a first BWP combination; and

the determining unit is configured to obtain, through query from the P DC locations, a DC location corresponding to the first BWP combination in the first CC pair as the DC location of the current communication.

Embodiment 48. The network device according to embodiment 46 or 47, wherein the first message further indicates that the P DC locations are related to a downlink CC of the terminal; and

the P DC locations comprise a DC location corresponding to any two BWPs in a CC pair composed of any two of A downlink CCs that are configured by the network device for the terminal, and the any two BWPs are respectively located in different CCs in the CC pair.

Embodiment 49. The network device according to embodiment 48, wherein the determining unit is further configured to:

if the DC location of the current communication does not overlap a location of an uplink resource of the terminal, or at least one DC location that is in the P DC locations indicated by the first message and that is used to determine the DC location of the current communication cannot be determined or is outside the uplink resource, determining not to process the DC location of the current communication; and

the uplink resource comprises at least one of the following: a configured uplink CC, a configured BWP in the configured uplink CC, an activated BWP in the configured uplink CC, a configured BWP in an activated uplink CC, and an activated BWP in the activated uplink CC.

Embodiment 50. The network device according to embodiment 46 or 47, wherein the first message further indicates that the P DC locations are related to the uplink CC of the terminal; and

the P DC locations comprise a DC location corresponding to any two BWPs in a CC pair composed of any two of A uplink CCs that are configured by the network device for the terminal, and the any two BWPs are respectively located in different CCs in the CC pair.

Embodiment 51. The network device according to embodiment 46 to 50, wherein any one of the P DC locations is a resource element RE location.

Embodiment 52. The network device according to any one of embodiments 46 to 51, wherein the first message further comprises a cell identity indicating a cell cell in which each of the P DC locations is located.

Embodiment 53. The network device according to any one of embodiments 46 to 52, wherein the network device further comprises:

a sending unit, configured to send a second message, wherein the second message indicates the terminal to send the first message.

Embodiment 54. A terminal, wherein the terminal comprises:

a sending unit, configured to send a first message, wherein the first message indicates P direct current DC locations, the P DC locations comprise a DC location corresponding to any two bandwidth parts BWP in a CC pair pair composed of any two of A component carriers CC that are configured by a network device for the terminal, the any two BWPs are respectively located in different CCs in the CC pair, P is an integer greater than or equal to 1, and A is an integer greater than 2.

Embodiment 55. The terminal according to embodiment 54, wherein the first message further indicates that the P DC locations are related to a downlink CC of the terminal; and

the P DC locations comprise a DC location corresponding to any two BWPs in a CC pair composed of any two of A downlink CCs that are configured by the network device for the terminal, and the any two BWPs are respectively located in different CCs in the CC pair.

Embodiment 56. The terminal according to embodiment 55, wherein if at least one of the P DC locations does not overlap a location of an uplink resource of the terminal, the first message further indicates that the at least one DC location cannot be determined or is outside the uplink resource of the terminal; and

the uplink resource comprises at least one of the following: a configured uplink CC and a configured BWP in the configured uplink CC.

Embodiment 57. The terminal according to embodiment 54, wherein the first message further indicates that the P DC locations are related to the uplink CC of the terminal; and

the P DC locations comprise a DC location corresponding to any two BWPs in a CC pair composed of any two of A uplink CCs that are configured by the network device for the terminal, and the any two BWPs are respectively located in different CCs in the CC pair.

Embodiment 58. The terminal according to embodiment 54 to 57, wherein any one of the P DC locations is a resource element RE location.

Embodiment 59. The terminal according to any one of embodiments 54 to 58, wherein the first message further comprises a cell identity indicating a cell cell in which each of the P DC locations is located.

Embodiment 60. The terminal according to any one of embodiments 54 to 59, wherein the terminal further comprises:

a receiving unit, configured to receive a second message, wherein the second message indicates the terminal to send the first message.

Embodiment 61. A network device, wherein the network device comprises one or more processors and one or more memories, the one or more memories are coupled to the one or more processors, and the one or more memories store computer instructions; and

when the one or more processors execute the computer instructions, the network device is enabled to perform the message processing method according to any one of embodiments 1 to 3, or perform the message processing method according to any one of embodiments 5 to 10, or perform the message processing method according to any one of embodiments 16 to 23.

Embodiment 62. A terminal, wherein the terminal comprises one or more processors and one or more memories, the one or more memories are coupled to the one or more processors, and the one or more memories store computer instructions; and

when the one or more processors execute the computer instructions, the terminal is enabled to perform the message processing method according to embodiment 4, or perform the message processing method according to any one of embodiments 11 to 15, or perform the message processing method according to any one of embodiments 24 to 30.

Embodiment 63. A chip system, wherein the chip system comprises a processing circuit and an interface, the processing circuit is configured to invoke a computer program from a storage medium and run the computer program stored in the storage medium, to perform the message processing method according to any one of embodiments 1 to 3, or perform the message processing method according to any one of embodiments 5 to 10, or perform the message processing method according to any one of embodiments 16 to 23, or perform the message processing method according to embodiment 4, or perform the message processing method according to any one of embodiments 11 to 15, or perform the message processing method according to any one of embodiments 24 to 30.

Embodiment 64. A computer readable storage medium, wherein the computer readable storage medium comprises computer instructions, and when the computer instruction are run, the message processing method according to any one of embodiments 1 to 3 is performed, or the message processing method according to any one of embodiments 5 to 10 is performed, or the message processing method according to any one of embodiments 16 to 23 is performed, or the message processing method according to embodiment 4 is performed, or the message processing method according to any one of embodiments 11 to 15 is performed, or the message processing method according to any one of embodiments 24 to 30 is performed.

Although this application is described with reference to specific features and embodiments thereof, it is clear that various modifications and combinations may be made to them without departing from the spirit and scope of this application. Correspondingly, this specification and the accompanying drawings are merely example description of this application defined by the appended claims, and are considered as covering any or all of modifications, variations, combinations or equivalents within the scope of this application. It is clearly that a person skilled in the art can make various modifications and variations to this application without departing from the spirit and scope of this application. This application is intended to cover these modifications and variations of this application provided that they fall within the scope of the claims and their equivalent technologies of this application.

**Claims**

1. A message processing method, wherein the method comprises:

   receiving a first message from a terminal, wherein the first message indicates P direct current DC locations, each of the P DC locations is a DC location corresponding to any two bandwidth parts BWP in a CC pair composed of any two of A component carriers CC that are configured by a network device for the terminal, the any two BWPs are respectively located in different CCs in the CC pair, P is an integer greater than or equal to 1, and A is an integer equal to or greater than 2; and
   determining a DC location of current communication based on the first message.

2. The method according to claim 1, wherein the A CCs includes a first CC configured with B1 BWPs and a second CC configured with B1 BWPs, the P equals to $C_{B1}^1 \times C_{B2}^1$ .

3. The method according to claim 1, wherein any one of the P DC locations is a resource element RE location.

4. The method according to claim 1, wherein the first message further comprises a cell identity indicating a cell in which each of the P DC locations is located.

5. The method according to claim 1, wherein the method further comprises:
   sending a second message to the terminal, wherein the second message indicates the terminal to send the first message.

6. The method according to any one of claims 1 to 5, wherein the first message further indicates that the P DC locations are related to a downlink CC of the terminal; or
   the first message further indicates that the P DC locations are related to the uplink CC of the terminal.

7. A message processing method, wherein the method comprises:
   sending a first message to a network device, wherein the first message indicates P direct current DC locations, each of the P DC locations is a DC location corresponding to any two bandwidth parts BWP in a CC pair composed of any two of A component carriers CC that are configured by the network device for a terminal, the any two BWPs are respectively located in different CCs in the CC pair, P is an integer greater than or equal to 1, and A is an integer equal to or greater than 2.

8. The method according to claim 7, wherein the A CCs includes a first CC configured with B1 BWPs and a second CC configured with B1 BWPs, the P equals to $C_{B1}^1 \times C_{B2}^1$ .

9. The method according to claim 7 or 8, wherein any one of the P DC locations is a resource element RE location.

10. The method according to any one of claims 7 to 9, wherein the first message further comprises a cell identity indicating a cell in which each of the P DC locations is located.

11. The method according to any one of claims 7 to 10, wherein the method further comprises:
receiving a second message from the network device, wherein the second message indicates the terminal to send the first message.

12. The method according to any one of claims 7 to 11, wherein the first message further indicates that the P DC locations are related to a downlink CC of the terminal; or
the first message further indicates that the P DC locations are related to the uplink CC of the terminal.

13. A communication apparatus, configured to perform the method according to any one of claims 1 to 12.

14. A computer program product comprising instructions which, when executed by a computer, cause the computer to carry out the method of any one of claims 1 to 12.

15. A chip, wherein the chip is connected to a memory or the chip comprises the memory, and is configured to read and execute instructions stored in the memory, to implement the method according to any one of claims 1 to 12.

Communication system 100

Network device 120

110-1

110-2

130-2

130-1

Terminal 110

Terminal 130

FIG. 1

Terminal

Network device

S201

Message 1

Receive the message 1

S202

Obtain a DC location of current communication through calculation based on the message 1

S203

FIG. 2

Intra-band CA communication

BWP 22

BWP 32

BWP 11

DC 11   DC 22   DC 32

Frequency

(a)

Intra-band CA communication

BWP 22

BWP 32

BWP 11

DC 11   DC 22   DC 32

f11   f0   f32   Frequency

(b)

FIG. 3

Terminal

Network device

S401

Message 3

Receive the message 3

S402

Determine a DC location of current communication based on the message 3

S403

FIG. 4

Message 2

| DC 11-12 |
| DC 11-13 | DC 12-13 |
| DC 11-14 | DC 12-14 | DC 13-14 |
| DC 11-21 | DC 12-21 | DC 13-21 | DC 14-21 |
| DC 11-22 | DC 12-22 | DC 13-22 | DC 14-22 | DC 21-22 |
| DC 11-23 | DC 12-23 | DC 13-23 | DC 14-23 | DC 21-23 | DC 22-23 |
| DC 11-24 | DC 12-24 | DC 13-24 | DC 14-24 | DC 21-24 | DC 22-24 | DC 23-24 |
| DC 11-31 | DC 12-31 | DC 13-31 | DC 14-31 | DC 21-31 | DC 22-31 | DC 23-31 | DC 24-31 |
| DC 11-32 | DC 12-32 | DC 13-32 | DC 14-32 | DC 21-32 | DC 22-32 | DC 23-32 | DC 24-32 | DC 31-32 |
| DC 11-33 | DC 12-33 | DC 13-33 | DC 14-33 | DC 21-33 | DC 22-33 | DC 23-33 | DC 24-33 | DC 31-33 | DC 32-33 |
| DC 11-34 | DC 12-34 | DC 13-34 | DC 14-34 | DC 21-34 | DC 22-34 | DC 23-34 | DC 24-34 | DC 31-34 | DC 32-34 | DC 33-34 |

66 in total

FIG. 5

Message 2

| DC 11-21 | DC 12-21 | DC 13-21 | DC 14-21 | | | | |
| DC 11-22 | DC 12-22 | DC 13-22 | DC 14-22 | | | | |
| DC 11-23 | DC 12-23 | DC 13-23 | DC 14-23 | | | | |
| DC 11-24 | DC 12-24 | DC 13-24 | DC 14-24 | | | | |
| DC 11-31 | DC 12-31 | DC 13-31 | DC 14-31 | DC 21-31 | DC 22-31 | DC 23-31 | DC 24-31 |
| DC 11-32 | DC 12-32 | DC 13-32 | DC 14-32 | DC 21-32 | DC 22-32 | DC 23-32 | DC 24-32 |
| DC 11-33 | DC 12-33 | DC 13-33 | DC 14-33 | DC 21-33 | DC 22-33 | DC 23-33 | DC 24-33 |
| DC 11-34 | DC 12-34 | DC 13-34 | DC 14-34 | DC 21-34 | DC 22-34 | DC 23-34 | DC 24-34 |

48 in total

FIG. 6

Intra-band CA communication

BWP 21

BWP 31

BWP 11

DC 11          DC 21          DC 31

Frequency

FIG. 7

Network device 800

| Sending unit 803 | Receiving unit 801 | Determining unit 802 |

FIG. 8

Terminal 900

| Sending unit 901 | Receiving unit 902 |

FIG. 9

Network device 1000

| Sending unit 1003 | Receiving unit 1001 | Determining unit 1002 |

FIG. 10

Terminal 1100

| Sending unit 1101 | Receiving unit 1102 |

FIG. 11

Network device 1200

| Processor 1201 | Memory 1202 |

FIG. 12

Terminal 1300

Processor 1301 — Memory 1302

FIG. 13

Network device 1400

Processor 1401 — Memory 1402

FIG. 14

Terminal 1500

Processor 1501 — Memory 1502

FIG. 15

Chip system 1600

Processor 1601 — Communication interface 1602

FIG. 16

Chip system 1700

Processor 1701 — Communication interface 1702

FIG. 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010415410

- CN 202011150428